# EUROPEAN PATENT APPLICATION

(11) **EP 4 495 861 A1**
(43) Date of publication of application: **22.01.2025**
(21) Application number: 22932110.4
(22) Date of filing: 17.03.2022
(51) Int. Cl.: G06Q 30/02, G06Q 10/087, G06Q 30/0207, G06Q 30/0251, G06Q 30/0601

(54) **SYSTEM, PROGRAM IN USER TERMINAL, AND SERVER**

(71) Applicant: Walklog Co., Ltd., Tokyo 151-0051 (JP)
(72) Inventor: HIDAKA, Tetsuya, Tokyo 151-0051 (JP)
(74) Representative: Isarpatent
(86) International application number: PCT/JP2022/012290
(87) International publication number: WO 2023/175835

(57) **Abstract**

Provided are a system, a program in a user terminal, and a server with which it is possible to provide the position of a physical retail store at which it is possible to purchase a product to be purchased that is desired by a user, among a plurality of physical retail stores. This server 3 has: an assessment unit 31a for assessing whether or not a product ID for a product to be purchased and a physical retail store product ID match one another; a physical-retail-store-specifying unit 31b for specifying a physical retail store carrying a product if it is assessed by the assessment unit 31a that the product ID for the product to be purchased and the physical retail store product ID match one another; and a transmission unit 35 for transmitting image data pertaining to the product and location information pertaining to the physical retail store to a user terminal 4 if it is assessed by the assessment unit 31a that the product ID for the product to be purchased and the physical retail store product ID match one another, a physical retail store is specified by the physical-retail-store-specifying unit 31b, and stock information pertaining to the product indicates that the product is in stock. The user terminal 4 has a display unit 44 for displaying a map. The display unit 44 displays, at a position on the map that is specified by the location information pertaining to the physical retail store, an image of a product based on the image data.

## Description

### BACKGROUND

The present invention relates to a system, a program of a user terminal and a server.

### RELATED ART

Conventionally, in the field of digital marketing, data has been acquired, recognized, and organized in terms of improving accuracy of customer targeting using data owned by companies. In other words, the data owned by companies comprises primary data collected by the company itself, secondary data purchased or obtained from other companies (e.g., other enterprises, government agencies, research institutes) that supplements the primary data, and tertiary data processed and formed by a third party for ease of use. The companies use this data to distribute advertisements of their products (goods or services) to prospective customers in order to uncover potential customer needs.

### PRIOR ART DOCUMENTS

### Patent document

[Patent Document 1] JP2015-118414A

### SUMMARY

### Problems to be Solved by Invention

By the way, in recent years, online shopping, where people purchase products at online stores, has become widespread. However, the reality is that while most of decision making in customer's purchasing actions are based on online information, most of purchasing actions are performed offline. In other words, it is a fact that customers often collect information on the Internet about the products they are considering purchasing, and purchase such products at physical stores. Therefore, the conventional method of distributing advertisements of a company's products to prospective customers originating from the company does not fit this reality. In addition, even if a user is interested in a product after viewing a product advertisement, it is necessary for the user to search for physical stores where the product is handled.

The present invention has been made in order to solve such a problem, and one of the purposes of the present invention is to provide a system, a program of a user terminal and a server, which can provide a location of a physical store where a user can purchase a purchase-considering product desired by the user among a plurality of physical stores.

### Means for Solving Problems

A system as an aspect of the present invention is a system comprising: a user terminal; a server connected to the user terminal via a network; and a database connected to the server, wherein the database stores purchase-considering product data including a product ID of a purchase-considering product of a user, which is acquired by the user terminal, and physical store data including physical store product IDs that identify products handled in each of a plurality of physical stores, image data of the products, stock information, and location information of the physical stores, the physical store data being associated with the physical store product IDs, the image data of the products, the stock information, and the location information, the server includes a determination unit configured to determine whether the product ID of the purchase-considering product matches at least one of the physical store product IDs, a physical store specification unit configured to specify at least one of the physical stores that handles the product in a case where the determination unit has determined that the product ID of the purchase-considering product matches the at least one of the physical store product IDs, and a transmission unit configured to transmit image data of the product and location information of the at least one of the physical stores to the user terminal in a case where the determination unit has determined that the product ID of the purchase-considering product matches the at least one of the physical store product IDs, the physical store specification unit has specified the at least one of the physical stores, and stock information of the product indicates that the product is in stock, the user terminal includes a display unit configured to display a map, and the display unit is configured to display an image of the product based on the image data at a location specified by the location information of the at least one of the physical stores on the map.

A program of a user terminal as an aspect of the present invention is a program of the user terminal, the program allowing the user terminal to execute: a step of acquiring purchase-considering product data including a product ID of a purchase-considering product of a user; a step of transmitting the purchase-considering product data acquired, to a server connected via a network; a step of receiving from the server, in a case where the server has determined that the product ID of the purchase-considering product matches a physical store product ID that identifies a product handled in at least one physical store, the server has specified the at least one of the physical stores that handles the product among a plurality of the physical stores, and stock information of the product indicates that the product is in stock, the step receiving image data of the product associated with the physical store product ID and location information of the at least one of the physical stores; and a step of displaying, by a display unit configured to display a map of the user terminal, an image of the product based on the image data at a location specified by the location information of the at least one of the physical stores on the map.

A server as an aspect of the present invention is a server connected to a database, wherein: the database stores purchase-considering product data including a product ID of a purchase-considering product of a user, which is acquired by a user terminal connected to the server via a network, and physical store data including a physical store product IDs that identify products handled in each of a plurality of physical stores, image data of the products, stock information, and location information of the physical stores, the physical store data being associated with the physical store product IDs, the image data of the products, the stock information, and the location information, the server comprises a determination unit configured to determine whether the product ID of the purchase-considering product of the user matches the physical store product ID, a physical store specification unit configured to specify at least one of the physical stores that handles the product in a case where the determination unit has determined that the product ID of the purchase-considering product matches the physical store product ID, and a transmission unit configured to transmit image data of the product and location information of the at least one of the physical stores to the user terminal in a case where the determination unit has determined that the product ID of the purchase-considering product matches the physical store product ID, the physical store specification unit has specified the at least one of the physical stores, and stock information of the product indicates that the product is in stock.

### [Effect of the invention]

According to the present invention, it is possible to provide a location of a physical store where a user can purchase a purchase-considering product desired by the user among a plurality of physical stores.

### BRIEF DESCRIPTION OF DRAWINGS

FIG. 1 is an example of a configuration diagram of a system according to an embodiment.
FIG. 2 shows a hardware configuration of a server.
FIG. 3 shows an example of a physical store product table.
FIG. 4 shows an example of a physical store table.
FIG. 5 shows an example of a catalog table.
FIG. 6 shows an example of a user information table.
FIG. 7 shows an example of an interest filter.
FIG. 8 is an example of a functional block diagram of a server.
FIG. 9 is an example of a functional block diagram of a user terminal.
FIG. 10 is an example of a login screen.
FIG. 11 is an example of a purchase-considering product data acquisition screen.
FIG. 12 is an example of a map display screen.
FIG. 13 is an example of a detailed information confirmation screen of a product.
FIG. 14 is an example of a detailed information confirmation screen of a recommended product.
FIG. 15 is an example of a catalog screen.
FIG. 16 is an example of an operational flowchart of a system according to an embodiment.

### DETAILED DESCRIPTION

Hereinafter, an embodiment of a system according to the present invention will be described in detail with reference to drawings. In this specification, more detailed explanations than necessary may be omitted for convenience of explanation. For example, detailed explanations of already well-known matters or duplicate explanations of substantially identical configurations may be omitted.

### [1. Configuration]

### [1-1. Summary]

The system of present embodiment is a system to present, to a user, a location of a physical store that handles a purchase-considering product that the user searched for or browsed online, and is a system for realizing so-called O2O (Online to Offline), in which the user is guided to the physical store based on the user's action on the Internet such as a website or an application to lead to purchase the product at the physical store. The purchase-considering product can be a product that a user has decided to purchase at the physical store, a product that a user is considering purchasing, or a product that the user is presumably considering purchasing. The product is goods or services. The services are services provided to a user in a physical store, and for example, the service is provision of food and beverages in a restaurant. Food taken out at a restaurant may be considered goods.

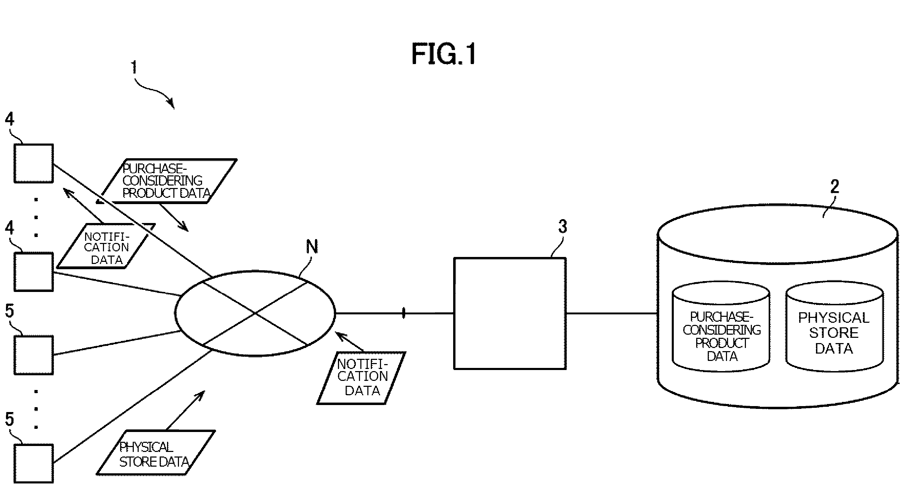

FIG. 1 is an example of a configuration diagram of a system according to the present embodiment. As shown in FIG. 1, a system 1 comprises a database 2, a server 3, a user terminal 4 and a terminal apparatus 5.

The database 2 is a storage device that is connected to the server 3 directly or via a network N, in which various information and data have been stored in advance and can be additionally stored.

In the database 2, physical store data is stored. The physical store data includes physical store product IDs that identify products handled in the physical stores, image data of the products, stock information, and location information of the physical stores. In the physical store data, these physical store product IDs, image data of the products, stock information and location information of the physical stores are associated with each other. Each of the physical stores is a store that physically exists and does not include online stores.

The database 2 can store purchase-considering product data of the user. The purchase-considering product data includes a product ID of the purchase-considering product. The purchase-considering product data can be acquired from the user terminal 4.

The server 3 is a processing device that is connected to the database 2 and is connected to the user terminal 4 via the network N such as the Internet. The server 3 can specify the physical store that handles the purchase-considering product desired by the user based on the purchase-considering product data of the user and the physical store data. The server 3 can transmit to the user terminal 4 information including the location information of the specified physical store, and information on the purchase-considering product and/or products handled in the physical store. The server 3 can acquire the purchase-considering product data from the user terminal 4 and the physical store data from the terminal apparatus 5 of the physical store, and can store the acquired purchase-considering product data and physical store data in the database 2.

The user terminal 4 is a terminal used by a user. The user can be, for example, an individual who is considering or wishes to purchase a product. The terminal apparatus 5 is a terminal used in a physical store. The terminal apparatus 5 can transmit the physical store data to the server 3 for storing the physical store data in the database 2. A plurality of user terminals 4 and terminal apparatuses 5 may each be included in the system 1.

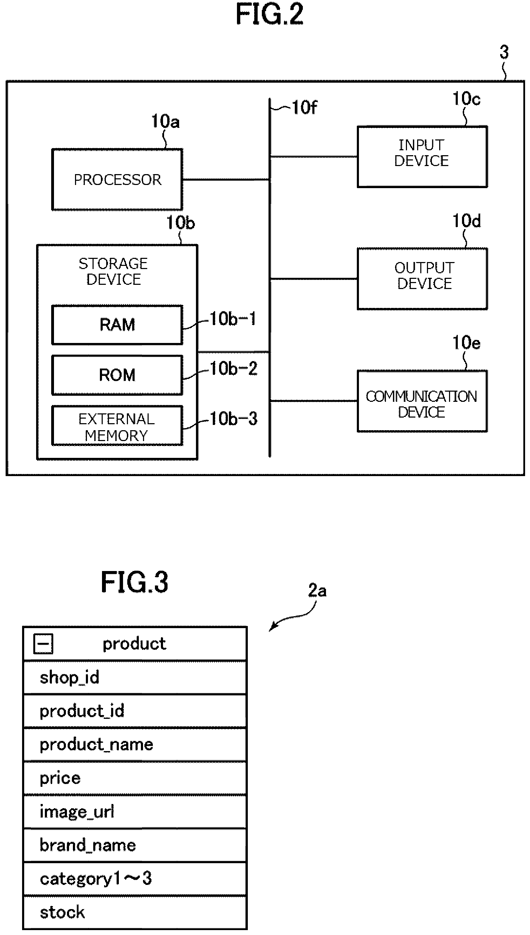

FIG. 2 shows a hardware configuration of the server 3. The server 3 may comprise a processor 10a, a storage device 10b, an input device 10c, an output device 10d, and a communication device 10e. Each of components 10a to 10e is connected by a bus 10f. An interface may be interposed between the bus 10f and each of the components 10a to 10e as necessary. The server 3 may comprise a computer such as a desktop computer, a tablet computer, and a laptop computer, and need not consist of a single physical device, but may comprise a plurality of physical devices. Furthermore, in the case where the server 3 comprises a plurality of physical devices, a load balancer (not shown) may be provided in the server 3. The load balancer distributes communications from outside (e.g., the user terminal 4, the terminal apparatus 5) to each device of the server 3 to reduce the load.

The processor 10a is configured to control the overall operation of the server 3. The processor 10a is an electronic circuit such as a CPU or MPU. The processor 10a is configured to execute various processes by reading and executing programs and data stored in the storage device 10b. The processor 10a may comprise a plurality of processors.

The storage device 10b includes a RAM 10b-1, which is volatile memory, and a ROM 10b-2, which is nonvolatile memory. The storage device 10b may include an external memory 10b-3. A RAM 10b-10 functions as a main memory and/or a work area of the processor 10a. The processor 10a is configured to load programs, etc. necessary for executing processing into the RAM 10b-1 from the ROM 10b-2 or the external memory 10b-3, and execute the loaded program to realize various operations. The ROM 10b-2 and the external memory 10b-3 store BIOS and OS which are control programs of the processor 10a, and various programs, data, tables, etc. necessary to realize functions performed by the computer. The external memory 10b-3 can include, for example, a flash memory, a hard disk, a DVD-RAM, a USB memory, a SSD, or the like.

The input device 10c receives operation instructions and inputs from the user or the like. The input device 10c is, for example, a user interface, such as an input button, a keyboard, a mouse, a touch panel, a touch pad, a wireless remote control, a microphone, and a camera. The touch panel functions as both an input device 10c and an output device 10d.

The output device 10d outputs data processed by the processor 10a and data to be stored and/or stored in the storage device 10b. The output device 10d can include, for example, a display device such as a CRT display, a liquid crystal display, an organic EL display, or a plasma display, an acoustic device such as a speaker that emits sound, or a printing device such as a printer.

The communication device 10e is an interface that is connected and communicates with external devices via a network or directly. The communication device 10e may be, for example, an interface such as a serial interface, a LAN interface, or the like.

Each unit of the server 3 is realized by various programs stored in the ROM 10b-2 or the external memory 10b-3 using each of the components 10a to 10f as resources, and the server 3 can function as a Web server and/or an application server.

The user terminal 4 and the terminal apparatus 5 can comprise the same hardware configuration as the server 3, that is, the processor 10a, the storage device 10b, the input device 10c, the output device 10d, and the communication device 10e. The user terminal 4 can be a computer such as a tablet computer or a portable terminal such as a smart phone. The User terminal 4 comprises a location detection sensor such as a GPS sensor. The terminal apparatus 5 can be a computer such as a desktop computer, a laptop computer, or a tablet computer. In the present embodiment, the user terminal 4 is a smartphone and the terminal apparatus 5 is a laptop computer.

### [1-2. Detailed configuration]

### (Database)

The database 2 stores physical store data of a plurality of physical stores. The physical store data can be, for example, data input from the terminal apparatus 5 of the physical store. The physical store data can include physical store product IDs that identify products handled in the physical stores, image data of the products, stock information, location information of the physical stores, names of the physical stores, business hours, and telephone numbers, and these physical store product IDs, image data of the products, stock information, location information of the physical stores, names of the physical stores, business hours, and telephone numbers are associated with each other. For example, the database 2 stores physical store IDs, product IDs, product names, price, image data, brand names, categories, stock information, location information of the physical stores, names of the physical stores, business hours and telephone numbers in association with each other in a physical store product table 2a and a physical store table 2b. The physical store table 2b may be provided for each physical store using the system 1, and the physical store product table 2a may be provided for each product handled in the physical stores using the system 1.

FIG. 3 shows an example of the physical store product table 2a. The physical store product table 2a associates a physical store ID, a product ID, a product name, a price of the product, image data, a brand name, categories and stock information. The physical store ID (shop_id) is an identifier that uniquely identifies the physical store. The product ID (product_id) is an identifier that uniquely identifies a product handled in physical store, and may be, for example, a JAN code (also called GTIN (Global Trade Item Number)), or a product code used independently in EC sites, companies, or physical stores. The product name (product_name) is the name of the product. The price is the price of the product in the physical store specified by the physical store ID. In the case where the product is a service, the price is a charge. The image data (image_url) is data indicating the image of the product specified by the product ID. The brand name (brand_name) of the product is the name of the brand of the product specified by the product ID. The categories (category 1-3) are categories corresponding to the product specified by the product ID. A plurality of categories can be provided, such as categories 1-3, and the categories 1-3 can be a large category, a middle category, and a small category. In one example, the categories 1-3 can be fashion, clothing, and jackets. The categories 1-3 are second interest filter items described later. The stock information (stock) is information indicating the stock amount of the product specified by the product ID. For example, when the stock information is 0, it indicates that the product is out of stock, and when the stock information is a natural number greater than or equal to 1, it indicates that the product is in stock.

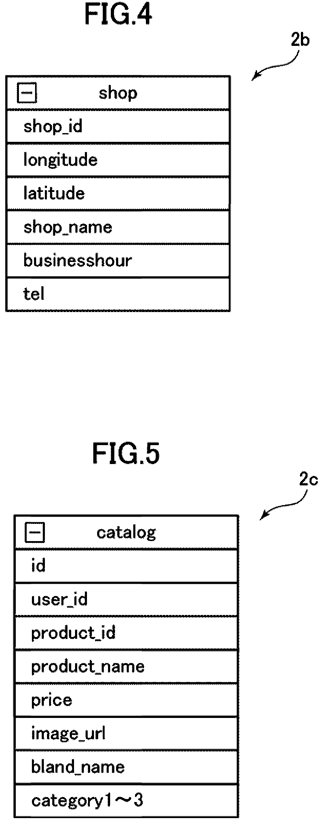

FIG. 4 shows an example of the physical store table 2b. The physical store table 2b associates a physical store ID, longitude data, latitude data, a name of the physical store, business hours and a telephone number. The physical store ID is an identifier that uniquely identifies the physical store as described above. The longitude data (longitude) is the data indicating the longitude of the physical store specified by the physical store ID. The latitude data (latitude) is the data indicating the latitude of the physical store specified by the physical store ID. The longitude data and the latitude data are location information of the physical store specified by the physical store ID. The name of the physical store (shop_name), the business hours (businesshour), and the telephone number (tel) are the name of the physical store specified by the physical store ID, the business hours, and the telephone number. The physical store table 2b may be associated with, in addition to the above, URLs of websites including homepage of the physical store specified by the physical store ID or its operating company, e-commerce sites (hereinafter referred to as "EC sites"), media sites, and social networking services, and applications of e-commerce, media, or social networking services. These applications are installed or downloaded to the user terminal 4.

The database 2 stores IDs, user IDs, purchase-considering product IDs, product names, image data, brand names of the products, categories, and user information, and those are associated by a catalog table 2c and a user information table 2d. The user information table 2d can be provided for each user using the user terminal 4 who uses the system 1, and the catalog table 2c can be provided for each purchase-considering product.

FIG. 5 shows an example of the catalog table 2c. The catalog table 2c associates the ID, the user ID, the purchase-considering product ID, the product name, the price of the product, the image data, the brand name, and the categories. The ID is an identifier that is assigned throughout the entire system. The user ID is an identifier that uniquely identifies the user who uses the user terminal 4. The purchase-considering product ID (product_id) is an identifier that uniquely identifies the purchase-considering product included in the purchase-considering product data. The purchase-considering product ID (product_id) may be, for example, a JAN code (also called the GTIN (Global Trade Item Number)), or a product code used in EC sites, companies, or the physical stores. The product name (product_name) is a name of the product included in the purchase-considering product data. The price (price) is a price of the product. In the case where the product is a service, the price is a charge. The image data (image_url) is data indicating the image of the product specified by the purchase-considering product ID. The brand name (brand_name) is a name of the brand of the product specified by the purchase-considering product ID. The categories (category 1-3) are categories corresponding to the product specified by the purchase-considering product ID. A plurality of categories can be provided, such as categories 1-3, and the categories 1-3 can be a large category, a middle category, and a small category. In one example, the categories 1-3 can be fashion, clothing, and jackets. The categories 1-3 are first interest filter items described later.

The purchase-considering product data can include purchase-considering product IDs, product names, prices of the products, image data, and brand names. The purchase-considering product data is the data acquired from websites including e-commerce sites (EC sites), media sites, or social networking services (SNSs), or from applications of an e-commerce, a media, or a social networking service, that the user has searched for or browsed via the user terminal 4. These applications are applications installed or downloaded to the user terminal 4 and have functions equivalent to those of websites including EC sites, media sites or social networking services (SNSs). The purchase-considering product data can be acquired from cart information or bookmarked information of the EC sites, or online action data of the user. The cart information, the bookmarked information, and the online action data of the user include information on a product that a user has selected for purchasing the product, a product that a user is considering purchasing, or a product that the user is presumably considering purchasing, and the information includes information indicated by the purchase-considering product data. The online action data here may be, for example, historical data including the information on the purchase-considering product, in which the user has searched for or browsed information on the purchase-considering product via the user terminal 4.

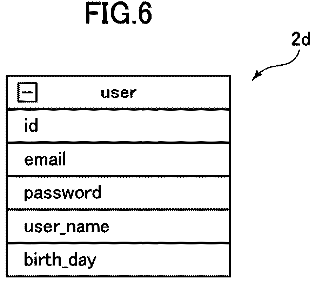

FIG. 6 shows an example of the user information table 2d. The user information table 2d associates a user ID, a username, user's e-mail address, a password, a birthday, and an actual age, which can be included in the user information. The user ID is an identifier that identifies the user. The username is an optional name of the user registered by the user specified by the user ID, such as a name of the user. The user's email address is an email address of a user registered by the user specified by the user ID. The password is a password required when the user specified by the user ID uses the system 1. The birthday is the date of birth of the user specified by the user ID. The actual age is the user's age calculated from the user's birthday.

The database 2 may store a product ID master table that associates the physical store product ID with the product ID of the purchase-considering product for the same product. In the case where unique product IDs for each physical store, each EC site, each company such as a manufacturer or the like are assigned to an identical product, the product ID master table is a table that associates those product IDs. This product ID master table allows determination that, even if the physical store product ID is not the same as the product ID of the purchase-considering product, the product is the identical product.

The database 2 stores first interest filter items, location information of users, and first segments in association with each other as information about the user, and also stores second interest filter items, location information of physical stores, and second segments in associated with each other as information related to the physical stores and the products handled therein.

The first interest filter items and the second interest filter items are items included in a common interest filter. The interest filter is an aggregate of multiple items that classify all the products handled by the system 1, and for example, the interest filter is a product tree that classifies products into a large category, a middle category, and a small category. In this specification, items included in the interest filter are referred to as interest filter items.

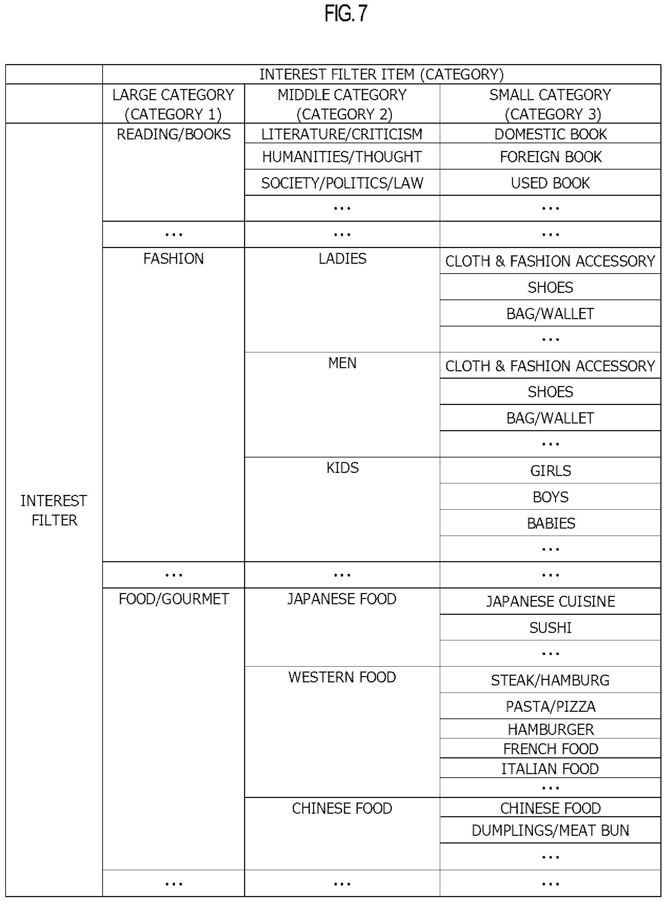

FIG. 7 shows an example of an interest filter. In the interest filter in the example shown in FIG. 7, the item of "Reading/Books" of the large category includes items such as "Literature/Criticism", "Humanities/Thought" and "Society Politics/ Law" as the middle category, and the items of "Literature/Criticism" and "Humanities/Thought" of the middle category include items such as "Domestic book" and "Foreign book" as the small category". The first interest filter items are interest filter items selected by the user from the interest filter via the user terminal 4, and are items related to an interest object of the user. In one example, in the case where the user is interested in domestic literature, the first interest filter items are "Reading/Books", "Literature/Criticism" and "Domestic book", and those items correspond to the categories 1-3 in the catalog table 2c, respectively. The second interest filter items are interest filter items that correspond to products handled in physical stores among a plurality of items included in the interest filter. The second interest filter items can be set, for example, by a physical store staff via the terminal apparatus. In one example, when the physical store is a bookstore, the second interest filter items for domestic literature books are "Reading/Books", "Literature/Criticism" and "Domestic book", and those items corresponds to the categories 1-3 in the physical store product table 2a, respectively.

In addition, in the example shown in FIG. 7, the item "Fashion" of the large category includes items such as "Ladies", "Men", and "Kids" as the middle category, and the item "Ladies" of the middle category includes items such as "Clothes & Fashion Accessory", "Shoes", and "Bag/Wallet" as the small category.

In addition, in the example shown in FIG. 7, the item "Food/Gourmet" of the large category includes items such as "Japanese food", "Western food" and "Chinese food" as the middle category, and the item "Japanese food" of the middle category includes items such as "Japanese cuisine" and "Sushi" as the small category.

The location information of the user can include information on the user's action range, information on an area displayed by a display unit 44 described later of the user terminal 4, and information on a registration area that has been registered in advance by the user. The information on the user's action range may include information on an area displayed by the display unit 44 described later of the user terminal 4 and information on the registration area that has been registered in advance by the user. For example, the information on the user's action range can be information or data indicating the areas where the user frequently visits. The information on the area displayed by the display unit 44 of the user terminal 4 is the information on the area displayed by the display unit 44 of the user terminal 4 when the application program for the system 1 is running on the user terminal 4. This information is acquired by the user terminal 4 and is the action history data of the user. The registration area is an area that has been registered in advance by the user and is displayed on a map by the display unit 44 of the user terminal 4, and the registration areas are, for example, Shibuya, Shinjuku, Ginza, and the like. These areas, that is, the registration areas may be areas that the users frequently visit or areas that the users are interested in. Each of the location information of the physical stores is the location information of a physical store, such as longitude and latitude. The location information of the physical store can be specified from the physical store product table 2a and the physical store table 2b.

The first segment is data related to user's attribute, for example, data classified by user's age and gender. The second segment is data that specifies the target consumers of the products handled in the physical stores, and for example, is data classified by the age and gender of the target consumers. In one example, these segments can be specified by classifying them by age group, such as teens, 20s, 30s, etc., or by gender, such as male, female, or other.

The database 2 stores IDs of users, product IDs of purchase-considering products and the location information in association with each other, and also the database 2 stores a product ID of a second recommended product, image data of the second recommended product, and the location information of the physical store in association with each other. The second recommended product is a product in the physical stores that has a similar appearance to the purchase-considering product or has the same or similar functions as the purchase-considering product. The second recommended product is typically a product that competes with the purchase-considering product. In addition, the database 2 stores a product corresponding table that associates the product ID of the purchase-considering product with the product ID of the second recommended product. The product corresponding table can be provided for each purchase-considering product and/or for each second recommended product.

The database 2 stores data such as images, videos, text information, and link information to be included in notifications (e.g., campaigns) notified to the user terminal 4 in association with each physical store. The images and videos may include images and videos of products handled in the physical store, and images and videos related to this physical store. These images and videos may be stored in a storage server separately from the database 2. The text information may include discount information on products handled in the physical stores, and text information on seasons and events. The link information may be URLs of websites including EC sites, media sites, and social networking services, and applications of an e-commerce, a media, or a social networking service.

### (Server)

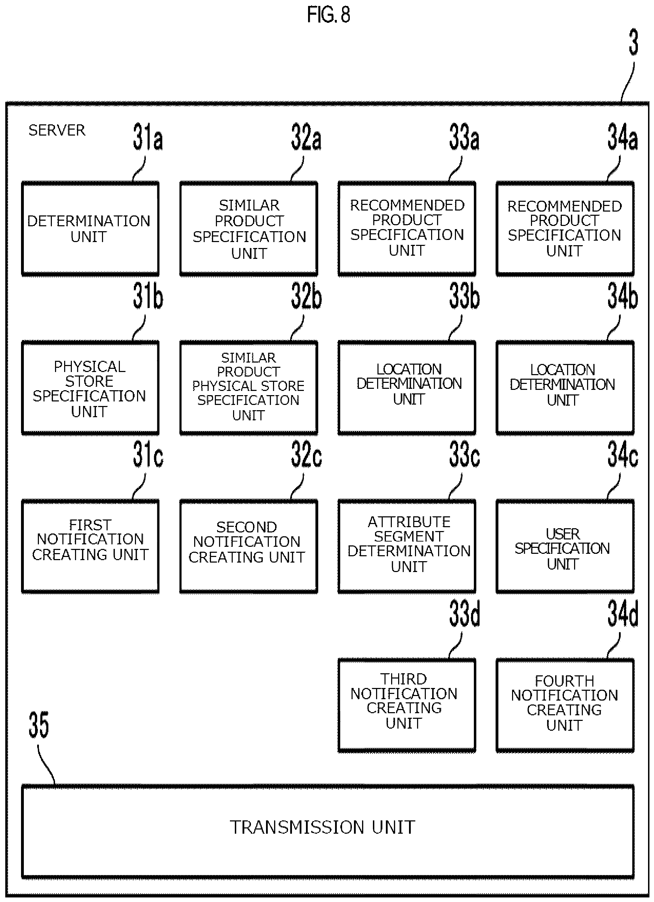

FIG. 8 is an example of a functional block diagram of the server 3. The server 3 includes a determination unit 31a, a physical store specification unit 31b, a first notification creating unit 31c, a similar product specification unit 32a, a similar product physical store specification unit 32b, a second notification creating unit 32c, a recommended product specification unit 33a, a location determination unit 33b, an attribute segment determination unit 33c, a third notification creating unit 33d, a recommended product specification unit 34a, a location determination unit 34b, a user specification unit 34c, a fourth notification creating unit 34d, and a transmission unit 35.

The determination unit 31a comprises the processor 10a, and is configured to determine whether the purchase-considering product ID matches the physical store product ID. The purchase-considering product ID and the physical store product ID are obtained from the database 2. In one example, the determination unit 31a compares each purchase-considering product ID with all or a part of the physical store product IDs and determine whether the purchase-considering product ID matches the physical store product ID. Here, the term "match(es)" means that the products are identical. In other words, even if the product ID of the purchase-considering product and/or the physical store product ID are unique product IDs, in the case where they are associated by the product ID master table, this is included in the fact that these product IDs are matched.

The physical store specification unit 31b comprises the processor 10a, and is configured to specify a physical store that handles the product in the case where the determination unit 31a has determined that the purchase-considering product ID matches the physical store product ID. Specifically, the physical store specification unit 31b is configured to specify the physical store product ID that has been determined to be matched by the determination unit 31a. The physical store specification unit 31b is configured to specify the physical store product table 2a including the physical store product ID and to specify the physical store associated in the physical store product table 2a. In addition, the physical store specification unit 31b is configured to specify the location information of the specified physical store from the physical store table 2b.

The first notification creating unit 31c is configured to acquire, from the database 2, image data of the product associated with the physical store product ID that has been determined to be matched by the determination unit 31a, stock information, and location information of the physical store based on the physical store product table 2a and the physical store table 2b, and to create notification data including an image of the product and the location information of the physical store in the case where the stock information for the product indicates that the product is in stock. This notification data is transmitted via the transmission unit 35 to the user terminal 4 of the user associated with the purchase-considering product ID that has been determined to be matched by the determination unit 31a. The notification data may include detailed information on the specified product. The detailed information includes the name of the product, a price or charge, the name of the physical store that handles the product, business hours, and a telephone number. This detailed information can be specified from the physical store product table 2a and the physical store table 2b.

The similar product specification unit 32a comprises the processor 10a, and in the case where the determination unit 31a has determined that the purchase-considering product ID does not match the physical store product ID, the similar product specification unit 32a is configured to specify a similar product that is similar to the purchase-considering product. In one example, the similar product specification unit 32a is configured to calculate the degree of similarity by comparing each of the image data of the purchase-considering product and the physical store product by an image analysis and to specify a similar product that is similar to the purchase-considering product.

In another example, the similar product specification unit 32a is configured to specify a similar product that is similar to the purchase-considering product based on the user's preferences. The user's preferences can be extracted by the similar product specification unit 32a based on potential data including preferences. The potential data including preferences may include, for example, text information such as product names, descriptions, size, colors, and categories of the product included in the cart information or bookmarked information of EC sites, and action history data such as search keywords, text information included in the browsed notifications, the browsing rates of the notification, the rate of visits to the physical store of the notification, the area in which the user has searched for or browsed, and the area in which the user walked. The above-mentioned notification is based, for example, on notification data created by the first notification creating unit 31c, the second notification creating unit 32c, the third notification creating unit 33d, and the fourth notification creating unit 34d. The browsing rate may be the ratio of the notifications browsed by the user among the notifications of a certain physical store transmitted to the user, or may be the ratio of the notifications browsed by the user among the notifications transmitted to the user in the entire industry of the physical store (e.g., in the industry of the same product category). The visit rate may be the number of visits to the physical store with respect to the number of notifications to users of the notifications of the physical store, or may be the number of visits to any of the physical stores among the physical stores with respect to the number of notifications to users in the notifications of the entire industry of the physical stores. Whether or not a user has visited a store can be detected, for example, by communicating between the user terminal 4 and the terminal apparatus 5. This detected information is transmitted to the server 3 by the terminal apparatus 5, and the server 3 calculates the visit rate based on the detected information and the visit rate is stored in the database 2. In addition, the user terminal 4 acquires the browsing history of the notification and transmits it to the server 3. The server 3 calculates the browsing rate based on the browsing history and stores it in the database 2.

The similar product specification unit 32a can extract user's preferences by morphological analysis of these text information and/or by action history data. These text information and action history data can be sequentially collected from the user terminal 4 and can be sequentially stored in the database 2 in association with the user.

In addition, the similar product specification unit 32a is configured to specify the image data of the specified similar product and the stock information from the physical store product table 2a. The similar product specification unit 32a can be configured to calculate the degree of similarity with the purchase-considering product based on image comparisons and/or user's preferences, and to specify a similar product with the highest degree of similarity among the similar products in stock. In addition, even if the determination unit 31a has determined that the purchase-considering product ID matches the physical store product ID, the similar product specification unit 32a can specify a similar product in the same manner as above, in the case where the product is out of stock.

The similar product physical store specification unit 32b comprises the processor 10a and is configured to specify a physical store that handles a similar product specified by the similar product specification unit 32a. Specifically, the similar product physical store specification unit 32b is configured to specify a physical store from the product ID of the similar product and the physical store product table 2a, and to specify the location information of the specified physical store from the physical store table 2b. The similar product physical store specification unit 32b determines whether the location of the specified physical store is included in the range specified by the location information of the user. The location information of the user can be acquired from the database 2.

The second notification creating unit 32c comprises the processor 10a, and is configured to acquire, from the database 2, image data, stock information and location information of the physical store of the similar product associated with the product ID of the similar product specified by the similar product specification unit 32a based on the physical store product table 2a and the physical store table 2b, and to create image data of the similar product and notification data including the location information of the physical store in the case where the stock information of the similar product indicates that the similar product is in stock. In the case where the specified similar product is out of stock, the second notification creating unit 32c acquires, from the database2, image data, stock information and location information of the physical store about another similar product specified by the similar product specification unit 32a (e.g., a similar product that has the second highest degree of similarity next to the similar product that is out of stock), and the second notification creating unit 32c creates notification data. The notification data is transmitted via the transmission unit 35 to the user terminal 4 of the user associated with the purchase-considering product ID of the purchase-considering product that is similar to the similar product. The notification data may include detailed information on the specified similar product. The detailed information includes a name of the similar product, a price or charge, a name of the physical store handling this similar product, business hours, and a telephone number. This detailed information can be specified from the physical store product table 2a and the physical store table 2b.

The recommended product specification unit 33a comprises the processor 10a and is configured to compare the first interest filter items with the second interest filter items, and in the case where those items are matched, the recommended product specification unit 33a is configured to specify a product associated with the second interest filter items. For example, the recommended product specification unit 33a compares the categories 1-3 included in the catalog table 2c with the categories 1-3 included in the physical store product table 2a. In the case where those categories are matched respectively, the recommended product specification unit 33a specifies a product from the physical store product table 2a. In this specification, the product specified by the recommended product specification unit 33a may be referred to as a first recommended product.

The location determination unit 33b comprises the processor 10a and is configured to determine whether the location of the physical store specified by the location information of the physical store associated with the specified first recommended product is included in a range specified by the location information of the user. Specifically, the location determination unit 33b is configured to specify the physical store handling the specified first recommended product and its location from the physical store product table 2a and the physical store table 2b of the specified first recommended product. The location determination unit 33b is configured to acquire the location information of the user from the database 2 and specify a range specified by the location information. Then, the location determination unit 33b is configured to determine whether the location of the specified physical store is within the specified range. The attribute segment determination unit 33c is configured to determine whether the first segment and the second segment are matched.

The third notification creating unit 33d comprises the processor 10a, and in the case where the recommendation product specification unit 33a has determined that the first interest filter item and the second interest filter item are matched, the location determination unit 33b has determined that the location of the physical store is within the range specified by the location information of the user, and the stock information of the first recommended product indicates that the first recommended product is in stock, the third notification creating unit 33d is configured to create notification data including image data of the first recommended product and the location information of the physical store. These data and information are the data and information associated by the physical store product table 2a and the physical store table 2b, and those data and information can be acquired from the database 2. The notification data may include a name of the first recommended product, a price or a charge, a brand name, categories, a name of the physical store, business hours, and a telephone number. The third notification creating unit 33d may create notification data not only in the case where there is a matching determination in the recommended product specification unit 33a and the location determination unit 33b, but also in the case where there is a matching determination in the attribute segment determination unit 33c.

The recommended product specification unit 34a is configured to specify a second recommended product. In one example, the recommended product specification unit 34a is configured to specify a product associated with the product ID of the second recommended product, among the products of the physical stores stored in the database 2. Since the second recommended product is one of the physical store products, the product ID of the second recommended product is associated with the physical store product ID or the physical store ID. In another example, the recommended product specification unit 34a may specify a second recommended product from the product ID of the purchase-considering product. In other words, the recommended product specification unit 34a can specify the second recommended product from the product ID of the purchase-considering product associated with the user, the catalog table 2c, and the product corresponding table.

The location determination unit 34b comprises the processor 10a and is configured to determine whether the location of the physical store specified by the location information of the physical store is within the range specified by the location information of the user. Specifically, the location determination unit 34b is configured to specify the physical store that handles the specified second recommended product and its location from the physical store product table 2a and the physical store table 2b of the specified second recommended product. The location determination unit 34b is configured to acquire the location information of the user from the database 2 and to specify a range specified by the location information. Then, the location determination unit 34b is configured to determine whether the location of the specified physical store is within the specified range. This location information of the physical store may be acquired from the database 2 based on the physical store product ID (the product ID of the second recommended product), the physical store product table 2a and the physical store table 2b. The location information of the physical store is location information. The location information of the user is location information associated with the user specified by the user specification unit 34c and can be acquired from the database 2.

The user specification unit 34c comprises the processor 10a, and is configured to specify a user that has been associated with the product ID of the purchase-considering product based on the product ID of the product handled in the physical stores (the second recommended product), which has a similar appearance to the purchase-considering product or has the same or similar functions as the purchase-considering product, the product corresponding table and the catalog table 2c. Specifically, the user specification unit 34c is configured to specify the purchase-considering product ID corresponding to the second recommended product by using the product ID and the product corresponding table of the second recommended product. Then, the user specification unit 34c is configured to specify a user ID from the specified purchase-considering product ID and the catalog table 2c. As a result, the user specification unit 34c can specify a user who desires a purchase- considering product corresponding to a physical store product.

The fourth notification creating unit 34d comprises the processor 10a, and is configured to acquire, from the database 2,
image data of the second recommended product associated with the physical store product ID, stock information, and location information of the physical store based on the physical store product table 2a and the physical store table 2b, and to create notification data including the image data and the location information of the physical store in the case where the stock information indicates that the second recommended product is in stock. This notification data is transmitted via the transmission unit 35 to the user terminal 4 of the user associated with the purchase-considering product ID of the purchase-considering product corresponding to the second recommended product. The notification data may include detailed information on the second recommended product. The detailed information includes a name of the second recommended product, a price or charge, a name of the physical store that handles the product, business hours, and a telephone number. This detailed information can be specified from the physical store product table 2a and the physical store table 2b.

The transmission unit 35 comprises the communication device 10e and is configured to transmit notification data to the user terminal 4. Specifically, in the case where the determination unit 31a has determined that the purchase-considering product ID matches the physical store product ID, the physical store specification unit 31b has specified the physical store, and the stock information of the product indicates that the product is in stock, the transmission unit 35 is configured to transmit the notification data including at least the image data of the product and the location information of the physical store. In addition, the transmission unit 35 is configured to transmit to the user terminal 4 notification data including the image data of the similar product specified by the similar product specification unit 32a and the location information of the physical store.

The transmission unit 35 is configured to transmit to the user terminal 4 notification data including the image data of the first recommended product specified by the recommended product specification unit 33a and the location information of the physical store in the case where the recommendation product specification unit 33a has determined that the first interest filter item and the second interest filter item are matched, the location determination unit 33b has determined that the location of the physical store is within the range specified by the location information of the user, and the stock information of the first recommended product indicates that the first recommended product is in stock.

The transmission unit 35 is configured to transmit, to the user terminal 4 of the user specified by the user specification unit 34c, the notification data including the image data of the second recommended product handled in the physical store corresponding to the purchase-considering product and the location information of the physical store. The transmission unit 35 can transmit various types of notification data when requested from the user terminal 4. In addition, the transmission unit 35 can transmit the requested information and data when requested from the terminal apparatus 5.

The products as objects of present embodiment are (1) a purchase-considering product, (2) a similar product, and (3) a recommended product, and the product including the products (2) and (3) may be referred to as a recommended product. In other words, the recommended product can include the similar product, the first recommended product, and the second recommended product. In this case, the similar product may be referred to as the first recommended product, the first recommended product may be referred to as the second recommended product, and the second recommended product may be referred to as the third recommended product. In addition, the notification data according to (1) the purchase-considering product is a result of matching the user's request with the stock of the physical store, and is automatically created by the server 3, so that the notification data can be called an automated campaign. Since the notification data according to (2) the similar product is automatically created by the server 3, the data can be called an automated recommendation campaign. The notification data according to (3) the recommended product involves a setting at a physical store through the terminal apparatus (5), and thus, the notification data can be called a manual-type recommendation campaign. The notification data according to (3) the recommended product can be a campaign that incidentally covers areas that cannot be covered by the automated campaign. In the present embodiment, unless otherwise noted, each product is distinguished by the above-mentioned designations (1) to (3).

### (User terminal)

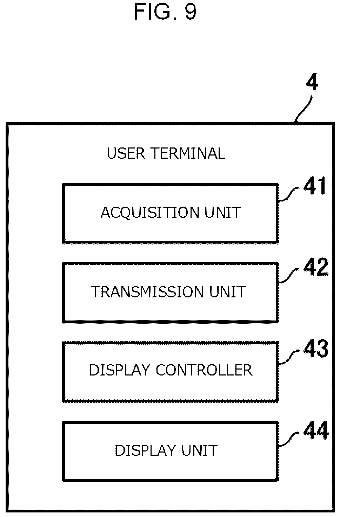

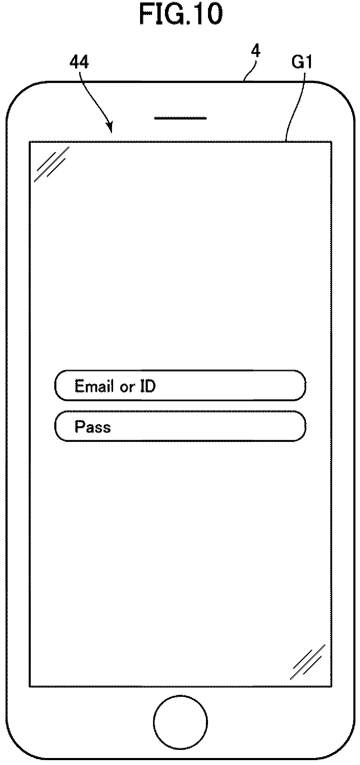

FIG. 9 is an example of a functional block diagram of the user terminal 4. The user terminal 4 comprises an acquisition unit 41, a transmission unit 42, a display controller 43, and a display unit 44. In the user terminal 4, an application program for the system 1 is installed, and when activating the application, the configurations 10a to 10f of the user terminal 4 are allowed to function as each part 41 to 44. To realize these functions, the user terminal 4 can receive an input of user information on a login screen G1 as shown in FIG. 10. The user information may be, for example, a user ID or user's e-mail address and password.

The acquisition unit 41 comprises the processor 10a and the communication device 10e and is configured to acquire purchase-considering product data including a product ID of the purchase-considering product of the user. The acquisition unit 41 is configured to acquire the purchase-considering product data from EC sites, media sites, or a social networking services, which the user has searched for or browsed. In one example, the acquisition unit 41 is configured to acquire the purchase-considering product data from the cart information or the bookmarked information of EC sites. The cart information and the bookmarked information include data of the purchase-considering product desired by the user.

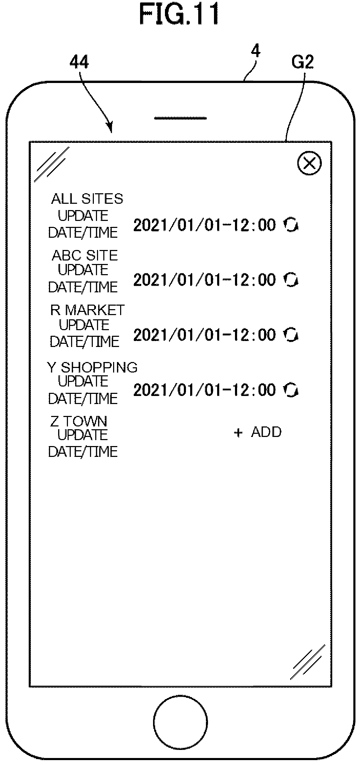

FIG. 11 is an example of a purchase-considering product data acquisition screen G2. As shown in FIG. 11, one or more EC sites are registered in advance by the user, and authentications of various EC sites are respectively performed by the user to acquire purchase-considering product data from the cart information and/or the bookmarked information of each EC site. In addition, on the purchase-considering product data acquisition screen G2, the user can register, add, and delete EC sites from which the purchase-considering product data is acquired. In addition, the acquisition unit 41 acquires the location information of the user and action history data such as online (Web) searches or browsing while the application is running. The action history data may include data from websites including media sites and social networking services in addition to EC sites, and data from applications of e-commerce, media, or a social networking service.

The transmission unit 42 comprises the processor 10a and the communication device 10e and is configured to transmit to the sever 3 the purchase-considering product data acquired by the acquisition unit 41. Transmission unit 42 can transmit a request to the server 3. In one example, the request is the transmission of notification data by the server 3. The request can be transmitted when the application for the system 1 of the user terminal 4 has been activated and/or when the application is activating. The transmission unit 42 is configured to transmit the online action history data to the server 3, and the action history data is stored in the database 2 in associated with the user ID by the server 3.

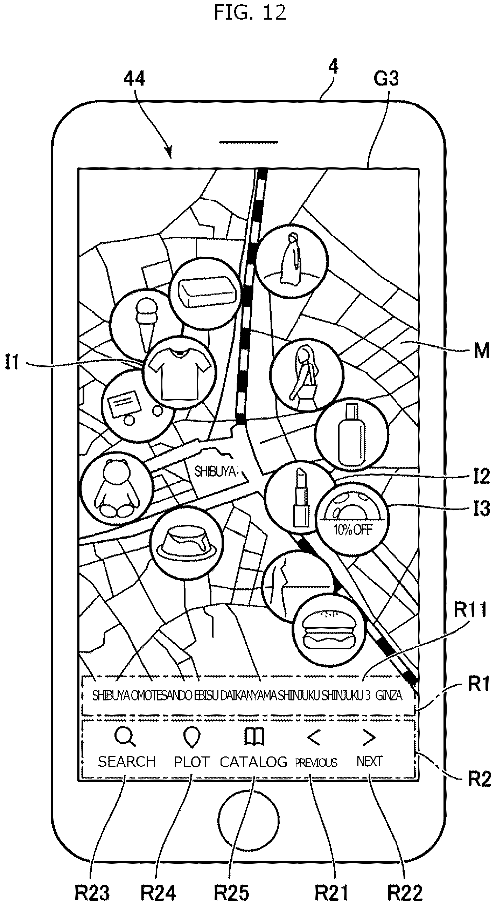

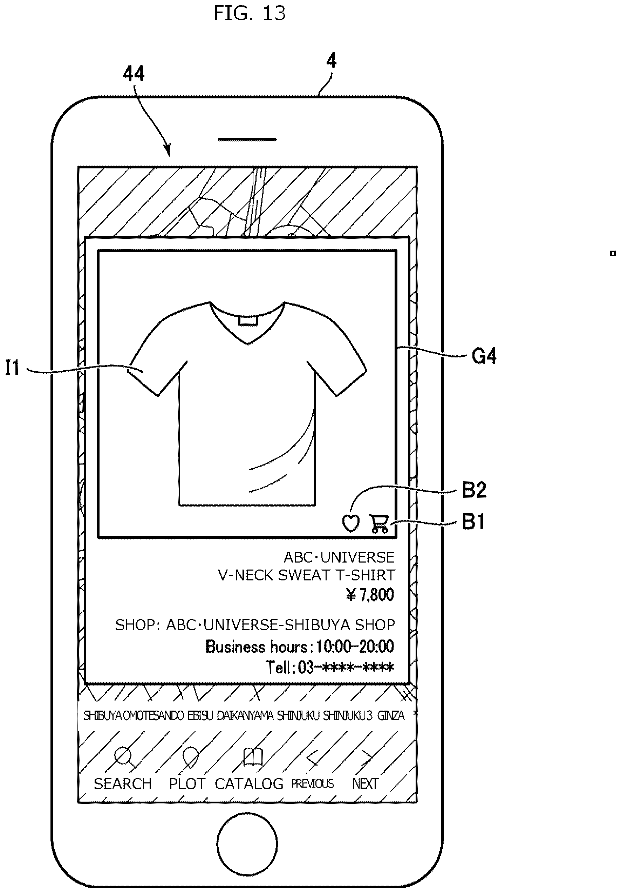

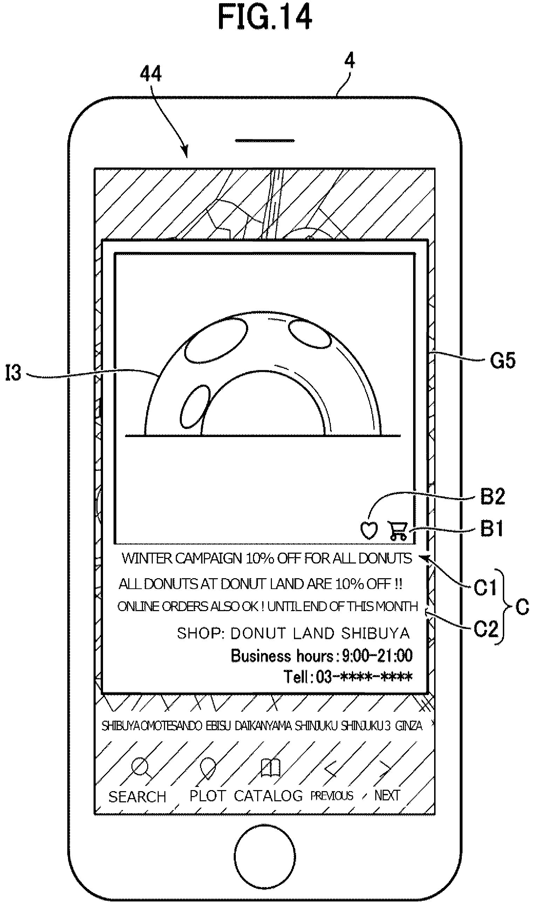

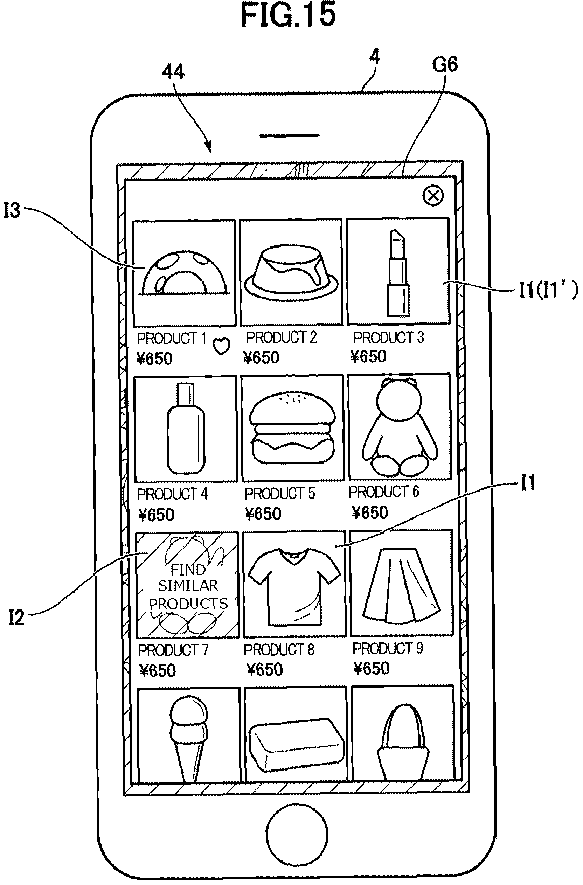

The display controller 43 comprises the processor 10a and is configured to allow the display unit 44 to display various screens. The various screens include a login screen G1, a purchase-considering product data acquisition screen G2, a map display screen G3 (FIG. 12), a detailed information confirmation screen of the product G4 (FIG. 13), a detailed information confirmation screen of the recommended product G5 (FIG. 14) and a catalog screen G6 (FIG. 15).

The display unit 44 comprises the input device 10c (e.g., a touch panel) and the output device 10d (e.g., a display unit), and is configured to display various screens based on control by the display controller 43.

The display unit 44 is configured to display a map and display an image based on the image data of the product at a location specified by the location information of the physical store on the map. This displayed image of the product may be (1) an image of the product whose purchase-considering product ID matches the physical store product ID, (2) an image of the similar product whose purchase-considering product ID does not match the physical store product ID, but is similar to the purchase-considering product, and/or (3) an image of a recommended product. The recommended product can include the first recommended product and the second recommended product. These images (1) to (3) may be displayed in different manners so that each type of images (1) to (3) can be distinguished from each other. For example, the images (1) to (3) may be marked with stars, double circles, etc., the outer frame of each image may be thickened, and the outer shape of each image may be differently shaped, such as a round, a square, or a polygon. Furthermore, the size and a display style may be different for each type of images (1) to (3).

In the present embodiment, the number of images of the products displayed on the map is equal to or less than a predetermined number. The predetermined number is not particularly limited, but can be 20, for example. The predetermined number is appropriately design-changeable depending on the display screen of the display unit 44, the size of the map, and the size of the product image.

The map can be a map of a predetermined range within a walking distance from a reference location. The predetermined range is a range within which the user can walk, and for example, the range can be a range of 1.6 km from the reference location. This range is calculated at 80 m/min within a 20-minute walking distance. The map may also be a map of a predetermined range within the travel range from the reference location. The travel range is a range within which the user can travel by a transportation means, such as walking, bicycling, or driving. For example, the travel range may be within 20 minutes using each transportation means. The travel speed of each means for defining the travel range can be designed accordingly. The shape of the predetermined range can be any shape, such as rectangular, square, diamond, or round. The reference location can be a current location of the user terminal 4, a reference location in the registration area, or a location specified by the user. The current location of the user terminal 4 can be acquired by a location sensor such as a GPS sensor included in the user terminal 4. The registration area is a map display area registered in advance by the user and is stored in the database 2 in association with the user ID. Each registration area has a reference location. For example, in the case where the registration area is Shibuya, the reference location can be set at Shibuya station (FIG. 12), and in the case where the registration area is Shinjuku, the reference location can be set at Shinjuku station. The setting of the reference location is not limited to stations, but can be any location such as amusement or commercial facilities. The display unit 44 can enlarge or reduce the map on the map display screen G3 or move the display area by the user's prescribed operations (e.g., pinch-in, pinch-out, drag, swipe, etc.). The location specified by the user can be a location specified by the user after displaying the desired area by dragging or other operations.

An image of a product is displayed at a location of the physical store that handles the product in the case where the location of the physical store is located within a predetermined range on the map.

In one example, in the case where the location of the physical store specified by the location information of the physical store is within a predetermined range and the physical store product of the physical store matches the purchase-considering product, the display unit 44 displays an image of the product (e.g., code I1 in FIG. 12) at the location of the physical store within the predetermined range on the map. In another example, in the case where the location of the physical store specified by the location information of the physical store is within a predetermined range and the physical store product (similar product) of the physical store is similar to the purchase-considering product, the display unit 44 displays an image of the similar product (e.g., code I2 in FIG. 12) at the location of the physical store within the predetermined range on the map. In another example, in the case whether the location of the physical store specified by the location information of the physical store is within a predetermined range, and the recommended product is specified, the display unit 44 displays an image of the recommended product (e.g., code I3 in FIG. 12) at the location of the physical store within the predetermined range on the map. Such displays by the display unit 44 can be performed, for example, in such a manner that the display controller 43 determines whether the location of the physical store specified by the location information of the physical store is within a predetermined range. For example, the display controller 43 is configured to calculate the distance between the reference location and the location of the physical store specified by the location information of the physical store. In the case where the calculated distance is equal to or less than the distance from the reference location to the predetermined range, the display controller 43 is configured to determine that the location of the physical store is within the predetermined range. In the case where the calculated distance exceeds the distance from the reference location to the predetermined range, the display controller 43 can determine that the location of the physical store is outside the predetermined range. Such calculation and determination of the distance may be limited to the location information of the physical store which is transmitted from the server 3 (e.g., only the location information of the physical store included in the notification data).

As shown in FIG. 12, the display unit 44 is configured to display the map display screen G3. The map display screen G3 displays images of a plurality of products. The images of those products may include the above-mentioned images (1) to (3). By a selection of the image of the product by the user (tap, etc.), which is displayed on the map, the display unit 44 is configured to display a detailed information confirmation screen including detailed information of the product related to a selected image.

FIG. 13 is an example of the detailed information confirmation screen of the product. The detailed information confirmation screen G4 is a screen that displays detailed information of a product whose ID matches that of the purchase-considering product, and when the image of the product which is displayed on the map display screen G3 and whose ID matches that of the purchase-considering product is selected, the detailed information is displayed on the screen G4. In the example shown in FIG. 13, the detailed information confirmation screen G4 is superimposed on the map display screen G3. The detailed information confirmation screen G4 can display information including an image I1 of the product, a brand name, a name, a price or charge, a name of the physical store handling the product, business hours and/or a telephone number.

FIG. 14 is an example of the detailed information confirmation screen of the recommended product. The detailed information confirmation screen G5 is a screen that displays detailed information on the recommended product, and in the case where the image of the recommended product displayed on the map display screen G3 is selected, the information is displayed on the screen G5. The detailed information confirmation screen G5 can display information including an image I3 of the recommended product, campaign information C, the name of the physical store that handles the product, business hours, and a telephone number. The campaign information C includes a title section C1 and a body section C2. The title section C1 may include discount information on the product, and text information on seasons and events. In the example shown in FIG. 14, the title section C1 shows that "Winter Campaign: 10% OFF for all products", and it is possible to confirm that 10% discount is offered for all products in the physical stores that handle the product due to the winter campaign. The body section C2 includes text information about the contents of the campaign. In the example shown in FIG. 14, it is possible to confirm a discount rate, a product to be discounted, a discount period, and that the product can also be ordered online by referring to the body section C2.

In addition, the detailed information confirmation screens G4 and G5 may be provided with a link button B1 to move to an EC site where this product can be purchased, and a registration button B2 to bookmark this product. The link button B1 allows the user to check detailed information of the product on the EC site. The link button B1 may be a link button not only to EC sites but also to websites including media sites or social networking services, or to applications of e-commerce, a media, or a social networking service. This enables the purchase of this product or the confirmation of detailed information on this product. The link button B1 to an application refers to a button that, when pressed, activates the application for e-commerce, media, or a social networking service installed or downloaded to the user terminal 4. The registration button B2 allows the product to be used as a material for analyzing user preferences in the similar product specification unit 32a, and the product whose registration button B2 has been pressed can be one of the products displayed on a catalog screen G6 described below. The link button B1 and the registration button B2 may be provided not only on the detailed confirmation screens G4 and G5 for the purchase-considering product and the recommended product, but also on the detailed confirmation screens of the similar products.

Again, FIG. 12 is referred to. The display unit 44 can display the selected area. In the example shown in FIG. 12, an area selection region R1 and an operation region R2 are provided at the bottom of the map display screen G3.

In the area selection region R1, multiple area selection buttons R11 are displayed. Each area selection button R11 is used to select an area to be displayed on the map display screen G3. In the example shown in FIG. 12, area selection buttons R11 for "Shibuya", "Omotesando", "Ebisu", "Daikanyama", "Shinjuku", "Shinjuku 3" (Shinjuku 3-chome), and "Ginza" are displayed. When each area selection button R11 is selected (e.g., tapped) by the user, a map M on the map display screen G3 switches to a map of the area corresponding to the area selection button R11. The area corresponding to the area selection button R11 may be either a registration area registered by the user or a preset area.

The operation region R2 includes several buttons for searching for a product. Specifically, in the operation region R2, a "Previous" button R21, a "Next" button R22, a search button R23, a plot button R24, and a catalog button R25 are displayed.

The "Previous" button R21 and the "Next" button R22 are buttons for switching display frames displayed on the map display screen G3. The display frame is the number of product images that can be displayed on the map display screen G3 at one time. For example, in the case where the number of product images to be displayed on the map display screen G3 in a given area is 50 in total for images (1) to (3), and the number of product images that can be displayed on the map display screen G3 at one time is limited to 20, the display unit 44 displays the product images in three separate display frames such as (a) 20, (b) 20, and (c) 10. For example, when the display unit 44 is displaying 20 images in (b), a selection of the "Previous" button R21 causes the display unit 44 to display 20 images in (a), and a selection of the "Next" button R22 causes the display unit 44 to display 10 images in (c).

In addition, the "Previous" button R21 and the "Next" button R22 can be used to switch the display frame with which a display priority is associated. Each display frame (e.g., limited to 20) is associated with a display priority (e.g., by the display controller 43). For example, in the case where the display priority is expressed by a natural number and the smaller the natural number, the higher the display priority, the display unit 44 first displays the product images in the display frame with a display priority 1, and then each time the "Next" button R22 is selected, the product images in the display frame with display priorities 2, 3 ... are displayed. The display unit 44 displays the images in the display frame having a high display priority each time the "Previous" button R21 is selected. In one example, in the case where the image of (1) has the highest priority, the image of (2) has the next highest priority, and the image of (3) has the lowest priority, then the image of (1) can be displayed in a display frame with the display priority 1, the image of (2) can be displayed in a display frame with the display priority 2, and the image of (3) can be displayed in a display frame with the display priority 3. In another example, in the case where the number of images of (1) displayed in the display frame with the display priority 1 is less than the number of product images that can be displayed on the map display screen G3 at one time, the display unit 44 may display the images by including the images of (2) and/or the images of (3) into the display frame with the display priority 1.

The search button R23 is a button for searching for products by keyword retrieval in the area displayed on the map display screen G3. By selecting the search button R23, the display unit 44 displays an input frame. The display unit 44 displays on the map an image of the product that corresponds to the keyword among the products displayed on the map display screen G3 by inputting the keyword into this input frame.

The plot button R24 is a button for filtering out the products in the area displayed on the map display screen G3 in terms of the category of the product. By selecting the plot button R24, the display unit 44 displays a category list screen. By selecting one of the categories in the category list screen, the display unit 44 displays on the map an image of the product that corresponds to the selected category among the products displayed on the map display screen G3.

The catalog button R25 is a button for displaying a catalog screen G6. The display unit 44 displays the catalog screen G6 by selecting the catalog button R25. FIG. 15 is an example of the catalog screen G6. In the example shown in FIG. 15, the catalog screen G6 is superimposed on the map display screen G3.

The catalog screen G6 is a list screen of the products online desired by the user. The catalog screen G6 may include images of the products, product names, and prices or charges of a plurality of purchase-considering products that has been determined to be matched in the determination unit 31a, and images, product names, and prices or charges of bookmarked products. Detailed images of the purchase-considering products can be, for example, images of products included in the cart information or the bookmarked information of EC sites. The images of the bookmarked products are the images of the products of (1) to (3) for which the registration button B2 is pressed on the detailed information confirmation screens G4, G5, or the like. In the example shown in FIG. 15, the image I3 of the top-leftmost product is an image of the bookmarked product, and a heart mark indicating that this product is a bookmarked product is attached. The image I1 (I1') is an image of a purchase-considering product (e.g., pink lipstick) similar to an image I2 of a similar product (e.g., red lipstick) shown in FIG. 12. The image I2 shown in FIG. 15 is an image of the similar product specified by the similar product specification unit 32a, and is displayed in a different manner from an image of a product that is identical to the purchase-considering product. In the example shown in FIG. 15, the image I2 is grayed out and the text "Find similar products" is superimposed, that is, the image I2 is displayed in a different manner from the image of the purchase-considering product. This enables determination that the image I2 is a similar product.

When an image of a product included in the catalog screen G6 is selected, the display unit 44 displays the image on the map display screen G3 at the location of the physical store that handles the product. In one example, when the physical stores that handle the selected product exist in multiple areas, the display unit 44 displays an area selection screen (not shown) and displays the map display screen G3 in the area selected on the area selection screen. In the area selection screen, the display unit 44 can display a registration area and an unregistered area in different colors or in some other distinguishable manner. In the case where there are multiple unregistered areas displayed on the area selection screen, the display unit 44 may give priority to displaying areas near the registration area.

According to the map display screen G3, the user can search for and browse a product in the displayed area. In contrast, according to the catalog screen G6, the user can centrally manage the products online desired by the user and check the location of the physical store from among the desired products.

### (Terminal apparatus)

The Terminal apparatus 5 is a terminal used in physical stores. The terminal apparatus 5 realizes each function through its browser by a web application for the system 1 provided by the server 3. The terminal apparatus 5 may allow the database 2 through the server 3 to store data such as physical store data, images, videos, text information, link information included in the notification data that is notified to the user terminal 4, and the physical store product ID of the physical store product that has a similar appearance to the purchase-considering product or has the same or similar functions as the purchase-considering product.

### [1-3. Operation]

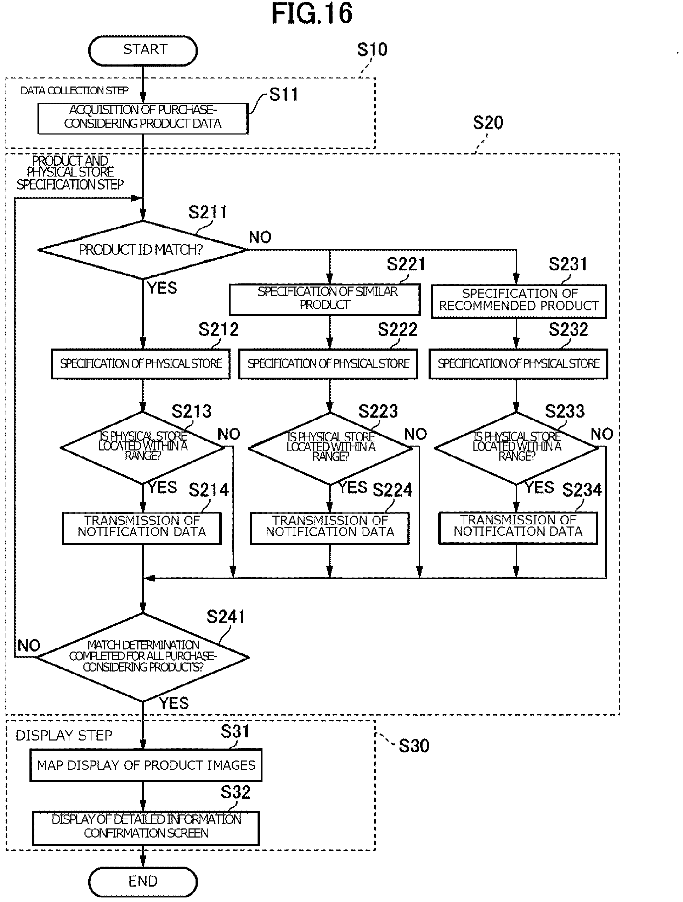

FIG. 16 is an example of an operational flowchart of the system according to the embodiment. The operation of the system 1 can include a data collection step (S10), a product and physical store specification step (S20), and a display step (S30). Here, it is assumed that user information, physical store data and various tables are stored in the database 2 in advance. Acquiring physical store data and various tables and storing them in the database 2 may be included in S10.

### (1) Data collection step

In the data collection step (S10), various data are collected. First, the user terminal 4 receives a user's login to the application on the login screen G1 and then receives authentications to each EC site or the like on the purchase-considering product data acquisition screen G2. Then, the acquisition unit 41 acquires purchase-considering product data including the product ID of the purchase-considering product (S11: acquisition of the purchase-considering product data). The acquired purchase-considering product data is transmitted to the server 3 by the transmission unit 42, and is stored in the database 2 in associated with the user ID by the server 3.

### (2) Product and physical store specification step

In the product and physical store specification step (S20), a product is specified, and a physical store that handles the specified product is specified.

Specifically, the determination unit 31a is configured to determine whether the product ID of the purchase-considering product matches the physical store product ID (S211: match determination of the product ID). In the case where the determination unit 31a has determined that these IDs are matched (YES in S211), the physical store specification unit 31b specifies the physical store that handles the product specified by the product ID (S212: specification of the physical store). In addition, the physical store specification unit 31b is configured to specify the location information of the specified physical store from the physical store table 2b. Then, the physical store specification unit 31b is configured to determine whether the location of the specified physical store is within the range specified by the location information of the user (S213: determination of the location of the physical store). After YES in S211, and YES in S212 and S213, the transmission unit 32 is configured to transmit notification data to the user terminal 4 (S214: transmission of the notification data). Specifically, the first notification creating unit 31c acquires, from the database 2, the image data of the product associated with the physical store product ID that has been determined to be matched by the determination unit 31a, the stock information, and the location information of the physical store based on the physical store product table 2a and the physical store table 2b, and creates notification data including the image data and the location information of the physical store in the case where the stock information indicates that the product is in stock. This notification data is transmitted, by the transmission unit 32, to the user terminal 4 of the user associated with the product ID of the purchase-considering product. On the other hand, in the case where the location of the specified physical store is not within the range specified by the location information of the user (NO in S213), the procedure proceeds to S241.

In the case where the determination unit 31a has determined that the product ID of the purchase-considering product does not match the physical store product ID (NO in S211), the similar product specification unit 32a is configured to specify a similar product that is similar to the purchase-considering product (S221: specification of a similar product). Specifically, the similar product specification unit 32a is configured to specify a similar product that is similar to the purchase-considering product based on the image data of the purchase-considering product and the physical store product, and potential data including preferences. Then, the similar product physical store specification unit 32b is configured to specify the physical store that handles the similar product (S222: specification of the physical store). Specifically, the similar product physical store specification unit 32b is configured to specify the physical store from the product ID of the specified similar product and the physical store product table 2a and to specify the location information of the physical store from the physical store table 2b of the specified physical store. Then, the similar product physical store specification unit 32b is configured to determine whether the location of the specified physical store is within the range specified by the location information of the user (S223: determination of the physical store location.

After YES in S221, S222 and S223, the transmission unit 35 is configured to transmit notification data to the user terminal 4 (S224: transmission of notification data). Specifically, the second notification creating unit 32c acquires, from the database 2, the image data of the similar product associated with the product ID of the similar product specified by the similar product specification unit 32a, the stock information and the location information of the physical store based on the physical store product table 2a and the physical store table 2b, and creates notification data including the image data and the location information of the physical store in the case where the stock information indicates that the product is in stock. Then, the notification data is transmitted by the transmission unit 35 to the user terminal 4 of the user associated with the purchase-considering product ID of the purchase-considering product that is similar to the similar product. On the other hand, in the case where the specified physical store location is not within the range specified by the location information of the user (NO in S224), the process proceeds to S241.

When the determination unit 31a has determined that the product ID of the purchase-considering product does not match the physical store product ID (NO in S211), a recommended product is specified (S231: specification of the recommended product). Specifically, in one example, a first recommended product is specified by the recommended product specification unit 33a. In another example, a second recommended product is specified by the recommended product specification unit 34a. The location determination units 33b and 34b are configured to specify the physical store and its location, which handles the specified recommended product from the physical store product table 2a and the physical store table 2b of the specified recommended product (S232: specification of the physical store). The location determination units 33b and 34b are configured to determine whether the location of the physical store that handles the specified recommended product is within the range specified by the location information of the user (S233: determination of the physical store location). Specifically, the location determination units 33b and 34b acquire the location information of the user from the database 2, and specify a range specified by the location information. Then, the location determination units 33b and 34b are configured to determine whether the location of the specified physical store is included in this range.

In the case where the location of the specified physical store is included in this range (YES in S233), the transmission unit 35 transmits notification data to the user terminal 4 (S234: transmission of notification data). Specifically, the third notification creating unit 33d is configured to create notification data including the image data of the first recommended product and the location information of the physical store. In addition, the fourth notification creating unit 34d is configured to create notification data including the image data of the second recommended product and the location information of the physical store. These data and information are the data and information associated by the physical store product table 2a and the physical store table 2b, and these data and information can be acquired from the database 2. The notification data may include a product name, a price or charge of the product, a brand name, categories, a name of the physical store, business hours, and a telephone number. These notification data are then transmitted by the transmission unit35 to the user terminal 4 of the user associated with the purchase-considering product ID of the purchase-considering product whose interest filter item is matched, and transmitted to the user terminal 4 of the user who desires the purchase-considering product similar to the physical store product based on the product corresponding table.

In the case where the location of the specified physical store is not included in the range (NO in S233), the notification data is not created by the third notification creating unit 33d and the fourth notification creating unit 34d, and the process proceeds to S241.

The server 3 (e.g., the determination unit 31a) determines whether the match determination by the determination unit 31a has been completed for all the purchase-considering products of the user (S241: Has the match determination been completed for all the purchase-considering products?) In the case where all the purchase-considering products have been matched (YES in S241), the process proceeds to S30 (specifically, S31). In the case where no match is found for all the purchase-considering products (NO in S241), the process returns to S211 and the operations S211 to S241 are performed for the remaining purchase-considering products.

### (3) Display step

In the display step (S30), as a first step, the display unit 44 of the user terminal 4 is configured to display images of the products specified in S20 at the locations on the map of the physical stores that handle those products as shown in FIG. 12 (S31: map display of product images). The image of the product specified in S20 can include (1) a product that matches the purchase-considering product, (2) a similar product, and (3) an image of the recommended product. The recommended product can include the first recommended product and the second recommended product. The display unit 44 is configured to first display images of the products in the display frame with the highest display priority (the display frame with the display priority 1). The products in the display frame with the highest display priority can preferentially include purchase-considering products. Thus, when the map display screen G3 is displayed, the user can immediately grasp the locations of the purchase-considering products that the user desires. By using the "Next" button R22 and the "Previous" button R21, the user can switch the images of the products displayed one after another to search for the location of a target product.

As a second step, the display unit 44 is configured to display a detailed information confirmation screen for confirming the detailed information of the product based on a selection of the image of the product by the user, which is displayed on the map display screen G3 (S32: display of a detailed information confirmation screen). The detailed information confirmation screen is, for example, the detailed information confirmation screens G4 and G5 shown in FIGs. 13 and 14.

In this way, the display step adopts a two-step system in which the user is allowed to confirm the location of the product on a map display and when the detailed information on the product is required, the detailed information confirmation screen is displayed, thereby providing the user with the information to the extent necessary for the user starting from the area.

When the user selects the catalog button R25 at the bottom of the map display screen G3 while using the map display screen G3 as the home screen, the display unit 44 is configured to display the catalog screen G6, which is a list screen of the products online desired by the user. When the user selects an image of one product included in the catalog screen G6, the display unit 44 is configured to display the image at the location of the physical store that handles the product on the map display screen G3. As a result, even if there is no image of the target product on the map display screen G3 displayed first, the location of the physical store that handles the product can be checked via the catalog screen G6.

In the above operations, although S221 to S224 and S231 to S234 are in parallel, they may also be in series. Furthermore, the operations of S231 to S234 may be included between S241 and S30, for example. This enables, for example, the images of the recommended products to be included in the map display screen G3 in the case where the number of images of the purchase-considering products does not reach the number of images that can be displayed at one time on the map display screen G3.

The system 1 can perform the following operations. In other words, the server 3 can transmit notification data at a predetermined timing to the user terminal 4 of a user who is browsing the pages of products A, B, and C handled in the physical store on the EC site of the physical store. The predetermined timing, for example, may include the following timings: (a) a timing when a user is at a predetermined location such as his/her home and starts an application for the system 1 on the user terminal 4; (b) a timing when a user (user terminal 4) is moving to an area where a physical store in which at least one of the products A, B or C is in stock exists and when the user stars an application for the system 1 on the user terminal 4; and (c) after a user (user terminal 4) arrives at the area where the physical store is located, and a timing when the application for the system 1 is started on the user terminal 4. The location information of the user is acquired by the user terminal 4 and/or transmitted to the server 3 after obtaining the user's consent at these timings.

The patterns (a) to (c) will be specifically described. On that premise, the system 1 performs the following operations. A site product table that associates the EC site with the products A, B, and C is stored in the database 2 in advance. When a user browses the pages of the products A, B, and C on the above-mentioned EC site, for example, at the user's home, the user terminal 4 (acquisition unit 41) acquires this browsing history data and transmits the browsing history data together with the user ID to the server 3 via the transmission unit 32. The server 3 associates the browsing history data with the user ID and stores them in the database 2.

### [Pattern (a)]

The pattern (a) is a pattern in the case where the user is at a predetermined location, such as his/her home. In this case, when the application for system 1 is started on the user terminal 4, a request and location information of the user are transmitted from the user terminal 4 to the server 3. The server 3 specifies the browsed product from the browsing history data and the site product table, specifies the product from the specified product and the physical store product table 2a, and specifies the location of the physical store that has the specified product in stock from the specified product, the physical store product table 2a and the physical store table 2b. Then, the server 3 specifies the nearest area to the user's current location based on the location information, including the specified physical store, from among the areas included in the location information of the user. The server 3 acquires an image data of the product, a product name, a price, stock information, and location information of the physical store, business hours, a telephone number, etc. from the specified product and the physical store product table 2a, and creates notification data including the above-mentioned information. Then, the server 3 transmits the created notification data to the user terminal 4. The user terminal 4 can notify the user that the browsed product is in stock at a nearby physical store, and can allows the display unit 44 to display the map display screen G3 based on the notification data

### [Pattern (b)]

The pattern (b) is a pattern in the case where the user is moving (e.g., toward the nearest area). The basic operation of the pattern (b) is the same as that of the pattern (a), and only the differences will be explained. The pattern (b) differs from the pattern (a) in that the application for the system 1 is started on the user terminal 4 while the user is moving, and then the request and the location information of the user are transmitted from the user terminal 4 to the server 3. Thus, the user terminal 4 receives notification data while the user is moving.

### [Pattern (c)]

The pattern (c) is a pattern in the case where the user arrives at the nearest area. The basic operation of the pattern (c) is the same as that of the pattern (a), and only the differences will be explained. The pattern (c) differs from the pattern (a) in that the application for the system 1 is started on the user terminal 4 after the user arrives at the nearest area, and then the request and the location information of the user are transmitted from the user terminal 4 to the server 3.

### [1-4. Action and effect]

(1) The system 1 of the present embodiment is configured to comprise a user terminal 4, a server 3 connected to the user terminal 4 via a network; and a database 2 connected to the server 3, wherein the database 2 stores purchase-considering product data including a product ID of a purchase-considering product of a user, which is acquired by the user terminal 4, and physical store data including physical store product IDs that identify products handled in each of a plurality of physical stores, image data of the products, stock information, and location information of the physical stores, the physical store data being associated with the physical store product IDs, the image data of the products, the stock information, and the location information, the server 3 includes a determination unit 31a configured to determine whether the product ID of the purchase-considering product matches at least one of the physical store product IDs, a physical store specification unit 31b configured to specify at least one of the physical stores that handles the product in a case where the determination unit 31a has determined that the product ID of the purchase-considering product matches the at least one of the physical store product IDs, and a transmission unit 35 configured to transmit image data of the product and location information of the at least one of the physical stores to the user terminal 4 in a case where the determination unit 31a has determined that the product ID of the purchase-considering product matches the at least one of the physical store product IDs, the physical store specification unit 31b has specified the at least one of the physical stores, and stock information of the product indicates that the product is in stock, the user terminal 4 includes a display unit 44 configured to display a map, and the display unit 44 is configured to display an image of the product based on the image data at a location specified by the location information of the at least one of the physical stores on the map.

Accordingly, it is possible to provide a location of a physical store where a user can purchase a purchase-considering product desired by the user among a plurality of physical stores, and thereby, the purchase-considering product for which information has been collected online can be linked with offline physical stores regardless of the brand of the product or the boundaries between physical stores. In other words, the conventional method is a company-based method in which advertisements for products that a company wanted to sell are distributed to prospective customers, and there is no connection to physical stores. In contrast, in the present embodiment, matching is performed between the purchase-considering product and the physical store product using user's purchase-considering product data as a starting point, and the location of the physical store that handles the purchase-considering product among a plurality of physical stores in the database is displayed on the map. Accordingly, starting from the user (customer), online information collecting can be seamlessly linked to offline purchasing action in physical stores regardless of the brand of the product or the boundaries between physical stores.

In the present embodiment, images of a plurality of products are displayed on the map display screen G3, images of a plurality of products are displayed on the catalog screen G6, and/or the detailed information confirmation screen of each product is displayed. This makes it possible to solve the problem of inability to centrally manage or consider products due to a conventional product advertisement distribution method.

In other words, the conventional product advertisement distribution method is often intended to distribute product advertisement to prospective customers within a single platform and to lead them to purchasing action within that platform. However, with the change of the times, the purchasing action has shifted from online purchases on a single platform to purchases at physical stores after collecting information on the purchase-considering product from a plurality of information sources. For example, while 90% (for instance) of information collecting when considering a purchase is obtained online, 92% (for instance) of the purchase itself is done offline. Thus, no matter how much primary data (e.g., information obtained through the company's website, survey results) is collected in the conventional method of distributing product advertisements, the advertisements delivered to customers can only be one source of information. In the conventional method, each company individually and independently distributes product advertisements to prospective customers, and thus the information on the same or different products becomes independent for each company. As a result, there was a problem in that it was not possible to centrally manage or consider the purchase-considering product. And this problem was one of the barriers to purchasing action as in the actual situation described above.

In contrast, in the present embodiment, the purchase-considering product data is obtained from a plurality of information sources, such as websites including EC sites, media sites, social networking services or the like, and/or applications with equivalent function, and the product can be centrally managed or considered by the map display screen G3, the catalog screen G6, and detailed information confirmation screens (e.g., detailed information confirmation screens G4 and G5). For example, when images of a plurality of products are displayed on the map display screen G3, information on the product can be obtained centrally through the detailed information confirmation screen for each product. In addition, since the location of the physical store is known by using the map display screen G3, the user can actually visit the physical store and consider the product. In addition, the product can be centrally managed by the catalog screen G6.

(2) The map is configured to be a map of a predetermined range within a walking distance from a reference location that is a current location of the user terminal 4, and in a case where a location of the at least one of the physical stores specified by the location information is within the predetermined range, and a physical store product of the at least one of the physical stores matches the purchase-considering product, the display unit 44 is configured to display the image of the product at the location of the at least one of the physical stores within the predetermined range on the map .

Thus, since the display of the map is a predetermined range within a walking distance which the user can easily visit from the current location of the user, the user can easily visually recognize the purchase-considering product and the location of the physical store that handles the product. In other words, in the case where the range of the map to be displayed is a wide range that is wider than the predetermined range within a walking distance (e.g., a range that straddles multiple prefectures or a whole country), the number of physical stores that handle the purchase-considering product may become too large, and the product images of the multiple types of purchase-considering products to be displayed on the map may be superimposed, or the display of the product images will be smaller even if the product images are not superimposed, making visual recognition difficult. In the present embodiment, however, the display range of the map is set to a predetermined range within a walking distance, so that the map is zoomed-in and displayed compared with the above wide range. As a result, the product images of the purchase-considering products to be displayed on the map are less likely to be superimposed, or the product images can be displayed in an appropriate size, and the purchase-considering product and the location where the user can purchase the product can be relatively easily recognized. In other words, in the present embodiment, the display range of the map is limited to a predetermined range within a walking distance, so that visual recognition problem of the product images of the purchase-considering products and the location of the physical stores can be technically solved. In addition, since the physical store that handles the purchase-considering product is within a walking distance, the hurdle for access by users can be lowered.

(3) The map is configured to be a map of a predetermined range within a walking distance from a reference location in a registration area that has been registered in advance by the user, and in a case where a location of the at least one of the physical stores specified by the location information is within the predetermined range, and the physical store product of the at least one of the physical stores matches the purchase-considering product, the display unit 44 is configured to display the image of the product at the location of the at least one of the physical stores within the predetermined range on the map. As a result, since the display of the map is a predetermined range within a walking distance which the user can easily visit from the reference location of the registration area, the user can easily visually recognize the purchase-considering product and the location of the physical store that handles the product. In addition, even if the user is not in the registration area (e.g., the user is at home), the location of a physical store that handles the purchase-considering product in the registration area can be confirmed in advance.

(4) The map is a map of a predetermined range within a walking distance from a reference location specified by the user, and in a case where a location of the at least one of the physical stores specified by the location information is within the predetermined range, and the physical store product of the at least one of the physical stores matches the purchase-considering product, the display unit 44 is configured to display the image of the product at the location of the at least one of the physical stores within the predetermined range on the map. As a result, since the display of the map is a predetermined range within a walking distance which the user can easily visit from the reference location specified by the user, the user can easily visually recognize the purchase-considering product and the location of the physical store that handles the product. In addition, even if the user is not in the predetermined area including the reference location specified by the user, the location of the physical store that handles the purchase-considering product in the predetermined area can be confirmed in advance.

(5) The number of the images of the products displayed on the map is equal to or less than a predetermined number. This makes it possible to suppress the superimposing of the images of the products displayed on the map, thus making it easier to confirm the location of the physical store that handles the purchase-considering product at a glance. In other words, in the case where an unlimited number of images of the products are displayed on the map, there will be a lot of superimposing, and it becomes difficult to confirm the product and the location of its physical store. However, this problem can be avoided by setting the number of images of the products to be displayed to equal to or less than a predetermined number.

(6) By a selection of the image of the product by the user, which is displayed on the map, the display unit 44 is configured to display a detailed information confirmation screen including detailed information of the product related to the image selected by the user. This enables the provision of detailed information on the purchase-considering product to the user. In other words, in the present embodiment, it is possible to present the information required by the user step by step. The first step is a map display, which allows users to confirm at a glance where each purchase-considering product is located. The second step is a display by using the detailed information confirmation screen. The detailed information confirmation screen is displayed by the user's selection of the image of the purchase-considering product that the user is interested in on the map display, so that the user can know the details of the product.

(7) The detailed information includes a name of the product, a price or charge, and a name of the at least one of the physical stores that handles the product, business hours, and/or a telephone number. This enables the user to obtain the information necessary to consider the purchase of the purchase-considering product.

(8) The detailed information confirmation screen includes a link button to move to websites including e-commerce sites, media sites, or social networking services, or to applications of e-commerce, a media, or a social networking service, with respect to the product related to the image selected. As a result, it is possible to provide detailed information on the product to the user according to the granularity of information required for the user's purchase consideration. For example, the price of a product at a physical store included in the detailed information can be compared with the price of a product at e-commerce sites (EC sites). In addition, product specifications such as size and weight, product description, comments from other companies about the product, evaluations, and reviews of the product can be confirmed on the EC sites.

(9) The user terminal 4 includes an acquisition unit 41 configured to acquire the purchase-considering product data, and the acquisition unit 41 is configured to acquire the purchase-considering product data from websites including e-commerce sites, media sites, or social networking services, or from applications of an e-commerce, a media, or a social networking service, that the user has searched for or browsed. As a result, it is possible to collect purchase-considering product data that exists online.

(10) The acquisition unit 41 is configured to acquire the purchase-considering product data from cart information or bookmarked information of the e-commerce sites or online action data of the user. This enables the user to obtain information (including the product ID) on the product that the user desires. The product included in the cart information or bookmarked information of these e-commerce sites or in the online action data of the user is a product desired by the user or is presumed to be a product desired by the user. In addition, the cart information, the bookmarked information, or the online action data of the user generally includes the product IDs, and thus, this makes it easier to match the online purchase-considering product with the product handled in the physical store.

(11) The purchase-considering product data includes image data indicating a product image of the purchase-considering product, the display unit 44 is configured to display a catalog screen G6 including product images of a plurality of the purchase-considering products, each of which has been determined to be matched in the determination unit 31a, and display on the map a location of the at least one of the physical stores that handles the product selected by a selection of the product image by the user. As a result, it is possible to check the location of the physical store that handles the product in terms of the product.

(12) The server 3 further includes a similar product specification unit 32a configured to specify a similar product that is similar to the purchase-considering product in a case where the determination unit 31a has determined that the product ID of the purchase-considering product does not match the physical store product ID, and a similar product physical store specification unit 32b configured to specify the at least one of the physical stores that handles the similar product, and the catalog screen G6 includes an image of the similar product in a different manner from the image of the product. This enables the user to distinguish the similar product from the purchase-considering product.

(13) The server 3 further includes a similar product specification unit 32a configured to specify a similar product that is similar to the purchase-considering product in a case where the determination unit 31a has determined that the product ID of the purchase-considering product does not match the physical store product ID, and a similar product physical store specification unit 32b configured to specify the at least one of the physical stores that handles the similar product, and the display unit 44 is configured to display an image of the similar product at a location specified by location information of the at least one of the physical stores that handles the similar product on the map. This enables the user to grasp the appearance of the similar product and the location of the physical store that handles the similar product.

(14) The database 2 stores a first interest filter item selected by the user and related to an interest object of the user, and location information of the user in association with each other, and the database 2 stores a second interest filter item associated with the product handled in the at least one of the physical stores, and location information of the at least one of the physical stores in association with each other. The server 3 further includes a recommended product specification unit 33a configured to specify a first recommended product that is the product associated with the second interest filter item in a case where the first interest filter item matches the second interest filter item, and a location determination unit 33b configured to determine whether a location of the at least one of the physical stores specified by location information of the at least one of the physical stores is within a range specified by location information of the user. The transmission unit 35 is configured to transmit to the user terminal image data of the first recommended product and location information of the at least one of the physical stores in a case where the first recommended product is specified by the recommended product specification unit 33a, the location determination unit 33b has determined that a location of the at least one of the physical stores is within a range specified by the location information of the user, and stock information of the first recommended product indicates that the first recommended product is in stock. In addition, the display unit 44 of the user terminal 4 is configured to display an image of the first recommended product based on the image data at a location specified by the location information of the at least one of the physical stores on the map.

As a result, while narrowing down the products of interest for the user with the interest filter item, and the product that is to be the first recommended product is narrowed down by the location information of the user, thus improving recommendation accuracy.

(15) The database stores an ID of the user, the product ID of the purchase-considering product and location information of the user in association with each other. The database 2 stores a product ID of the second recommended product that is the product of the at least one of the physical stores and has a similar appearance to the purchase-considering product or has the same or similar functions as the purchase-considering product, an image data of the second recommended product, and location information of the at least one of the physical stores in association with each other. The database 2 stores a product corresponding table that associates the product ID of the purchase-considering product with the product ID of the second recommended product. The server 3 further includes a location determination unit 34b configured to determine whether a location of the at least one of the physical stores specified by location information of the at least one of the physical stores is within a range specified by the location information of the user, and a user specification unit 34c configured to specify the user that has been associated with the product ID of the purchase-considering product based on the product ID of the second recommended product handled in the at least one of the physical stores and the product corresponding table, the transmission unit 35 is configured to transmit an image data of the second recommended product and location information of the at least one of the physical stores to the user terminal 4 of the user specified by the user specification unit 34c, and the display unit 44 of the user terminal 4 is configured to display an image of the second recommended product based on the image data at a location specified by the location information of the at least one of the physical stores on the map.

This enables the user to grasp the appearance of the second recommended product and the location of the physical store that handles this product. In particular, the user who desires the purchase-considering product corresponding to this product is specified based on the product of the physical store, thereby enabling the physical store to accurately notify the user of the product of its own physical store. Thus, the user can consider purchasing similar products other than the purchase-considering product, thereby broadening the range of choice.

(16) The location information of the user is information on an area displayed by the display unit 44 or information on a registration area that has been registered in advance by the user. As a result, since these areas are areas that have been displayed or registered when the user searches for a purchase-considering product, these areas are areas where the user shows interest and where the user is likely to actually visit, thus encouraging the user's purchasing action.

### [2. Other embodiments]

In another embodiment of the present invention, a program may also be employed that realizes the functions of the embodiment and information processing shown in the flowcharts of the embodiment of the present invention described above or may be a computer-readable storage medium storing the program. In the other embodiment, a method of realizing the function of the embodiment or the information processing shown in the flowcharts of the embodiment of the present invention described above may also be employed. In the other embodiment, a server may also be employed that can provide a computer with a program to realize the function of the embodiment and information processing shown in the flowcharts of the embodiment of the present invention described above. In the other embodiment, a virtual machine may also be employed that realizes the function of the embodiment or the information processing shown in the flowcharts of the embodiment of the present invention described above.

In the processing or the operation described above, the processing or the operation can be freely changed as long as there is no inconsistency in the processing or the operation, such as using data at a certain step that should not yet be available at that step. Each of the examples described above is an example to explain the present invention, and the present invention is not limited to these examples. The present invention can be implemented in various forms without departing from the abstract of the invention.

For example, the present invention may include the following method.

A method, comprising: a determination step of determining by a server whether a product ID of a purchase-considering product matches a physical store product ID that identifies a product handled in a physical store, a physical store specification step of specifying the physical store that handles the product in a case where it has been determined that the product ID of the purchase-considering product matches the physical store product ID by the determination step, a transmission step of transmitting by the server image data of the product, stock information and location information of the physical store to a user terminal connected to the server via a network in a case where it has been determined that the product ID of the purchase-considering product matches the physical store product ID by the determination step, and the physical store has been specified by the physical store specification step, and a display step of displaying a map by the user terminal, wherein the display step displays an image of the product based on the image data at a location specified by location information of the physical store on the map.

In addition, instead of the image of the product to be displayed on the map display screen G3, a video of the product may be displayed, or the image designated by the physical store may be displayed. These images and videos can be stored in the database 2 in advance and can be associated with various tables.

### REFERENCE SIGNS LIST

- 1: system
- 2: Database
- 3: Server
- 4: User terminal
- 5: Terminal apparatus
- 10a: Processor
- 10b: Storage device
- 10b-1: RAM
- 10b-2: ROM
- 10b-3: External memory
- 10c: Input device
- 10d: Output device
- 10e: Communication device
- 10f: Bus
- 31a: Determination unit
- 31b: Physical store specification unit
- 31c: First notification creating unit
- 32a: Similar product specification unit
- 32b: Similar product physical store specification unit
- 32c: Second notification creating unit
- 33a: Recommended product specification unit
- 33b: Location determination unit
- 33c: Attribute segment determination unit
- 33d: Third notification creating unit
- 34a: Recommended product specification unit
- 34b: Location determination unit
- 34c: User specification unit
- 34d: Fourth notification creating unit
- 35: Transmission unit
- 41: Acquisition unit
- 42: Transmission unit
- 43: Display controller
- 44: Display unit
- G1: Login screen
- G2: Purchase-considering product data acquisition screen
- G3: Map display screen
- G4: Detailed information confirmation screen
- G5: Detailed information confirmation screen
- G6: Catalog screen
- N: Network

## Claims

1. A system, comprising:
a user terminal;
a server connected to the user terminal via a network; and
a database connected to the server, wherein
the database stores
purchase-considering product data including a product ID of a purchase-considering product of a user, which is acquired by the user terminal, and
physical store data including physical store product IDs that identify products handled in each of a plurality of physical stores, image data of the products, stock information, and location information of the physical stores, the physical store data being associated with the physical store product IDs, the image data of the products, the stock information, and the location information,
the server includes
a determination unit configured to determine whether the product ID of the purchase-considering product matches at least one of the physical store product IDs,
a physical store specification unit configured to specify at least one of the physical stores that handles the product in a case where the determination unit has determined that the product ID of the purchase-considering product matches the at least one of the physical store product IDs, and
a transmission unit configured to transmit image data of the product and location information of the at least one of the physical stores to the user terminal in a case where the determination unit has determined that the product ID of the purchase-considering product matches the at least one of the physical store product IDs, the physical store specification unit has specified the at least one of the physical stores, and stock information of the product indicates that the product is in stock,
the user terminal includes a display unit configured to display a map, and the display unit is configured to display an image of the product based on the image data at a location specified by the location information of the at least one of the physical stores on the map.

2. The system according to claim 1, wherein:
the map is a map of a predetermined range within a walking distance from a reference location that is a current location of the user terminal, and
in a case where a location of the at least one of the physical stores specified by the location information is within the predetermined range, and a physical store product of the at least one of the physical stores matches the purchase-considering product, the display unit is configured to display the image of the product at the location of the at least one of the physical stores within the predetermined range on the map.

3. The system according to claim 1 or 2, wherein:
the map is a map of a predetermined range within a walking distance from a reference location in a registration area that has been registered in advance by the user, and
in a case where a location of the at least one of the physical stores specified by the location information is within the predetermined range, and the physical store product of the at least one of the physical stores matches the purchase-considering product, the display unit is configured to display the image of the product at the location of the at least one of the physical stores within the predetermined range on the map.

4. The system according to any one of claims 1 to 3, wherein:
the map is a map of a predetermined range within a walking distance from a reference location specified by the user, and
in a case where a location of the at least one of the physical stores specified by the location information is within the predetermined range, and the physical store product of the at least one of the physical stores matches the purchase-considering product, the display unit is configured to display the image of the product at the location of the at least one of the physical stores within the predetermined range on the map.

5. The system according to any one of claims 1 to 4, wherein:
the number of the images of the products displayed on the map is equal to or less than a predetermined number.

6. The system according to any one of claims 1 to 5, wherein:
by a selection of the image of the product by the user, which is displayed on the map, the display unit is configured to display a detailed information confirmation screen including detailed information of the product related to the image selected by the user.

7. The system according to claim 6, wherein:
the detailed information includes a name of the product, a price or charge, and a name of the at least one of the physical stores that handles the product, business hours, and/or a telephone number.

8. The system according to claim 6 or 7, wherein:
the detailed information confirmation screen includes a link button to move to websites including e-commerce sites, media sites, or social networking services, or to applications of e-commerce, a media, or a social networking service, with respect to the product related to the image selected.

9. The system according to any one of claims 1 to 8, wherein:
the user terminal includes an acquisition unit configured to acquire the purchase-considering product data, and
the acquisition unit is configured to acquire the purchase-considering product data from websites including e-commerce sites, media sites, or social networking services, or from applications of an e-commerce, a media, or a social networking service, that the user has searched for or browsed.

10. The system according to claim 9, wherein:
the acquisition unit is configured to acquire the purchase-considering product data from cart information or bookmarked information of the e-commerce sites or online action data of the user.

11. The system according to any one of claims 1 to 10, wherein:
the purchase-considering product data includes image data indicating a product image of the purchase-considering product,
the display unit is configured to
display a catalog screen including a plurality of the product images of a plurality of the purchase-considering products, each of which has been determined to be matched in the determination unit, and
display on the map a location of the at least one of the physical stores that handles the product selected by a selection of the product image by the user.

12. The system according to claim 11, wherein:
the server further includes
a similar product specification unit configured to specify a similar product that is similar to the purchase-considering product in a case where the determination unit has determined that the product ID of the purchase-considering product does not match the physical store product ID, and
a similar product physical store specification unit configured to specify the at least one of the physical stores that handles the similar product, and
the catalog screen includes an image of the similar product in a different manner from the image of the product.

13. The system according to claim 11, wherein:
the server further includes
a similar product specification unit configured to specify a similar product that is similar to the purchase-considering product in a case where the determination unit has determined that the product ID of the purchase-considering product does not match the physical store product ID, and
a similar product physical store specification unit configured to specify the at least one of the physical stores that handles the similar product, and
the display unit is configured to display an image of the similar product at a location specified by location information of the at least one of the physical stores that handles the similar product on the map.

14. The system according to any one of claims 1 to 13, wherein:
the database stores a first interest filter item selected by the user and related to an interest object of the user, and location information of the user in association with each other,
the database stores a second interest filter item associated with the product handled in the at least one of the physical stores, and location information of the at least one of the physical stores in association with each other,
the server further includes
a recommended product specification unit configured to specify a first recommended product that is the product associated with the second interest filter item in a case where the first interest filter item matches the second interest filter item, and
a location determination unit configured to determine whether a location of the at least one of the physical stores specified by the location information of the at least one of the physical stores is within a range specified by the location information of the user,
the transmission unit configured to
transmit to the user terminal image data of the first recommended product and the location information of the at least one of the physical stores in a case where the first recommended product is specified by the recommended product specification unit, the location determination unit has determined that a location of the at least one of the physical stores is within a range specified by the location information of the user, and stock information of the first recommended product indicates that the first recommended product is in stock, and
the display unit of the user terminal is configured to display an image of the first recommended product based on the image data at a location specified by the location information of the at least one of the physical stores on the map.

15. The system according to any one of claims 1 to 14, wherein:
the database stores an ID of the user, the product ID of the purchase-considering product and location information of the user in association with each other,
the database stores a product ID of the second recommended product that is the product of the at least one of the physical stores and has a similar appearance to the purchase-considering product or has the same or similar functions as the purchase-considering product, an image data of the second recommended product, and location information of the at least one of the physical stores in association with each other,
the database stores a product corresponding table that associates the product ID of the purchase-considering product with the product ID of the second recommended product,
the server further includes
a location determination unit configured to determine whether a location of the at least one of the physical stores specified by the location information of the at least one of the physical stores is within a range specified by the location information of the user, and
a user specification unit configured to specify the user that has been associated with the product ID of the purchase-considering product based on the product ID of the second recommended product handled in the at least one of the physical stores and the product corresponding table,
the transmission unit is configured to transmit an image data of the second recommended product and location information of the at least one of the physical stores to the user terminal of the user specified by the user specification unit, and
the display unit of the user terminal is configured to display an image of the second recommended product based on the image data at a location specified by the location information of the at least one of the physical stores on the map.

16. The system according to claim 14 or 15, wherein:
the location information of the user is information on an area displayed by the display unit or information on a registration area that has been registered in advance by the user.

17. A program of a user terminal, the program allowing the user terminal to execute:
a step of acquiring purchase-considering product data including a product ID of a purchase-considering product of a user;
a step of transmitting the purchase-considering product data acquired, to a server connected via a network;
a step of receiving from the server, in a case where the server has determined that the product ID of the purchase-considering product matches a physical store product ID that identifies a product handled in at least one physical store, the server has specified the at least one of the physical stores that handles the product among a plurality of the physical stores, and stock information of the product indicates that the product is in stock, the step receiving image data of the product associated with the physical store product ID and location information of the at least one of the physical stores; and
a step of displaying, by a display unit configured to display a map of the user terminal, an image of the product based on the image data at a location specified by the location information of the at least one of the physical stores on the map.

18. A server connected to a database, wherein:
the database stores
purchase-considering product data including a product ID of a purchase-considering product of a user, which is acquired by a user terminal connected to the server via a network, and
physical store data including a physical store product IDs that identify products handled in each of a plurality of physical stores, image data of the products, stock information, and location information of the physical stores, the physical store data being associated with the physical store product IDs, the image data of the products, the stock information, and the location information,
the server comprises
a determination unit configured to determine whether the product ID of the purchase-considering product of the user matches the physical store product ID,
a physical store specification unit configured to specify at least one of the physical stores that handles the product in a case where the determination unit has determined that the product ID of the purchase-considering product matches the physical store product ID, and
a transmission unit configured to transmit image data of the product and location information of the at least one of the physical stores to the user terminal in a case where the determination unit has determined that the product ID of the purchase-considering product matches the physical store product ID, the physical store specification unit has specified the at least one of the physical stores, and stock information of the product indicates that the product is in stock.
